# EUROPEAN PATENT SPECIFICATION

(11) **EP 2 847 094 B1**
(45) Date of publication and mention of the grant of the patent: **31.01.2018**
(21) Application number: 13724975.1
(22) Date of filing: 07.05.2013
(51) Int. Cl.: B65D 81/32, B65D 75/00, B65D 75/52, B65D 75/58

(54) **FLEXIBLE CONTAINERS WITH MULTIPLE PRODUCT VOLUMES**
FLEXIBLE BEHÄLTER MIT MEHREREN PRODUKTVOLUMEN
RÉCIPIENTS FLEXIBLES DOTÉS DE VOLUMES DE PRODUITS MULTIPLES

(30) Priority: 07.05.2012 US 201261643813 P; 07.05.2012 US 201261643823 P; 26.07.2012 US 201261676042 P; 06.08.2012 US 201261680045 P; 19.11.2012 US 201261727961 P; 13.03.2013 US 201361780039 P; 14.03.2013 US 201361782951 P; 14.03.2013 US 201361782219 P; 14.03.2013 US 201361782859 P; 14.03.2013 US 201361782757 P; 15.03.2013 US 201361789135 P
(43) Date of publication of application: 18.03.2015
(73) Proprietor: The Procter & Gamble Company, Cincinnati, OH 45202 (US)
(72) Inventor: STANLEY, Scott, Kendyl, Cincinnati, OH 45202 (US); MCGUIRE, Kenneth, Stephen, Cincinnati, OH 45202 (US); BERG, Charles, John, Jr., Cincinnati, OH 45202 (US)
(74) Representative: Engisch, Gautier
(86) International application number: PCT/US2013/039807
(87) International publication number: WO 2013/169686

(56) References cited:
- EP-A1- 1 757 531
- EP-A2- 1 964 785
- WO-A1-96/01775
- WO-A1-02/085729
- WO-A1-2005/063589
- WO-A1-2008/064508
- DE-U1-202005 016 704
- FR-A1- 2 801 287
- US-A- 3 930 286
- US-A1- 2003 192 909
- US-A1- 2005 109 796
- US-A1- 2008 149 666
- US-A1- 2008 277 310
- US-A1- 2011 079 608

## Description

### FIELD

The present disclosure relates in general to containers, and in particular, to containers made from flexible material and having multiple product volumes.

### BACKGROUND

Fluent products include liquid products and/or pourable solid products. In various embodiments, a container can be used to receive, contain, and dispense one or more fluent products. And, in various embodiments, a container can be used to receive, contain, and/or dispense individual articles or separately packaged portions of a product. A container can include one or more product volumes. A product volume can be configured to be filled with one or more fluent products. A container receives a fluent product when its product volume is filled. Once filled to a desired volume, a container can be configured to contain the fluent product in its product volume, until the fluent product is dispensed. A container contains a fluent product by providing a barrier around the fluent product. The barrier prevents the fluent product from escaping the product volume. The barrier can also protect the fluent product from the environment outside of the container. A filled product volume is typically closed off by a cap or a seal. A container can be configured to dispense one or more fluent products contained in its product volume(s). Once dispensed, an end user can consume, apply, or otherwise use the fluent product(s), as appropriate. In various embodiments, a container may be configured to be refilled and reused or a container may be configured to be disposed of after a single fill or even after a single use. A container should be configured with sufficient structural integrity, such that it can receive, contain, and dispense its fluent product(s), as intended, without failure.

A container for fluent product(s) can be handled, displayed for sale, and put into use. A container can be handled in many different ways as it is made, filled, decorated, packaged, shipped, and unpacked. A container can experience a wide range of external forces and environmental conditions as it is handled by machines and people, moved by equipment and vehicles, and contacted by other containers and various packaging materials. A container for fluent product(s) should be configured with sufficient structural integrity, such that it can be handled in any of these ways, or in any other way known in the art, as intended, without failure.

A container can also be displayed for sale in many different ways as it is offered for purchase. A container can be offered for sale as an individual article of commerce or packaged with one or more other containers or products, which together form an article of commerce. A container can be offered for sale as a primary package with or without a secondary package. A container can be decorated to display characters, graphics, branding, and/or other visual elements when the container is displayed for sale. A container can be configured to be displayed for sale while laying down or standing up on a store shelf, while presented in a merchandising display, while hanging on a display hanger, or while loaded into a display rack or a vending machine. A container for fluent product(s) should be configured with a structure that allows it to be displayed in any of these ways, or in any other way known in the art, as intended, without failure.

A container can also be put into use in many different ways, by its end user. A container can be configured to be held and/or gripped by an end user, so a container should be appropriately sized and shaped for human hands; and for this purpose, a container can include useful structural features such as a handle and/or a gripping surface. A container can be stored while laying down or standing up on a support surface, while hanging on or from a projection such as a hook or a clip, or while supported by a product holder, or (for refillable or rechargeable containers) positioned in a refilling or recharging station. A container can be configured to dispense fluent product(s) while in any of these storage positions or while being held by the user. A container can be configured to dispense fluent product(s) through the use of gravity, and/or pressure, and/or a dispensing mechanism, such as a pump, or a straw, or through the use of other kinds of dispensers known in the art. Some containers can be configured to be filled and/or refilled by a seller (e.g. a merchant or retailer) or by an end user. A container for fluent product(s) should be configured with a structure that allows it to be put to use in any of these ways, or in any other way known in the art, as intended, without failure. A container can also be configured to be disposed of by the end user, as waste and/or recyclable material, in various ways.

One conventional type of container for fluent products is a rigid container made from solid material(s). Examples of conventional rigid containers include molded plastic bottles, glass jars, metal cans, cardboard boxes, etc. These conventional rigid containers are well-known and generally useful; however their designs do present several notable difficulties.

First, some conventional rigid containers for fluent products can be expensive to make. Some rigid containers are made by a process shaping one or more solid materials. Other rigid containers are made with a phase change process, where container materials are heated (to soften/melt), then shaped, then cooled (to harden/solidify). Both kinds of making are energy intensive processes, which can require complex equipment.

Second, some conventional rigid containers for fluent products can require significant amounts of material. Rigid containers that are designed to stand up on a support surface require solid walls that are thick enough to support the containers when they are filled. This can require significant amounts of material, which adds to the cost of the containers and can contribute to difficulties with their disposal.

Third, some conventional rigid containers for fluent products can be difficult to decorate. The sizes, shapes, (e.g. curved surfaces) and/or materials of some rigid containers, make it difficult to print directly on their outside surfaces. Labeling requires additional materials and processing, and limits the size and shape of the decoration. Overwrapping provides larger decoration areas, but also requires additional materials and processing, often at significant expense.

Fourth, some conventional rigid containers for fluent products can be prone to certain kinds of damage. If a rigid container is pushed against a rough surface, then the container can become scuffed, which may obscure printing on the container. If a rigid container is pressed against a hard object, then the container can become dented, which may look unsightly. And if a rigid container is dropped, then the container can rupture, which may cause its fluent product to be lost.

Fifth, some fluent products in conventional rigid containers can be difficult to dispense. When an end user squeezes a rigid container to dispense its fluent product, the end user must overcome the resistance of the rigid sides, to deform the container. Some users may lack the hand strength to easily overcome that resistance; these users may dispense less than their desired amount of fluent product. Other users may need to apply so much of their hand strength, that they cannot easily control how much they deform the container; these users may dispense more than their desired amount of fluent product.

From US2008/0149666 a support structure is known to maintain a stand up pouch in an upright condition. The support structure is in the form of an inflatable jacket and is rigid in construction.

### SUMMARY

The present disclosure describes various embodiments of containers made from flexible material. Because these containers are made from flexible material, these containers can be less expensive to make, can use less material, and can be easier to decorate, when compared with conventional rigid containers. Embodiments according to the present invention are configured to include multiple product volumes and are disclosed in the appended claims. In variations of a first set of embodiments, an article of manufacture can be configured to include a first disposable self-supporting flexible container having a first structural support frame and a first product volume, wherein the first structural frame is configured to support the first product volume; and a second disposable flexible container having a second product volume; wherein the first container is joined to the second container and these articles are configured to include any number of product volumes, any of which can be joined together, in any manner disclosed herein. In this first set of embodiments, neither, either or both of these flexible containers can be configured to be stand up containers. Any part, parts, or all of any embodiment in this first set of embodiments can be configured according to any embodiment of the present disclosure, in any workable combination.

In a second set of embodiments, a non-durable self-supporting flexible container can be configured to include a first product volume; a second product volume; and a structural support frame, configured to support both the first product volume and the second product volume. In this second set of embodiments, any of these flexible containers can be configured to be stand up containers. In variations of this second set of embodiments, any of these articles can be configured to include any number of product volumes, each supported by the structural support frame, in any manner disclosed herein. Any part, parts, or all of any embodiment in this second set of embodiments can be configured according to any embodiment of the present disclosure, in any workable combination.

In a third set of embodiments, a disposable self-supporting flexible container can be configured to include a first product volume, which directly contains a first fluent product; a second product volume, which directly contains a second fluent product that differs from the first fluent product; and a structural support frame, configured to support both of the product volumes. In this t set of embodiments, any of these flexible containers can be configured to be stand up containers. In variations of this third set of embodiments, any of these flexible containers can be configured to include any number of product volumes, each with a different fluent product, in any manner disclosed herein. Any part, parts, or all of any embodiment in this third set of embodiments can be configured according to any embodiment of the present disclosure, in any workable combination.

In a fourth set of embodiments, a non-durable self-supporting flexible container can be configured to include: a first product volume, which directly contains a first fluent product; a second product volume, which directly contains a second fluent product that differs from the first fluent product; and a structural support frame, configured to support both the first product volume and the second product volume; and only one dispenser. In this fourth set of embodiments, any of these flexible containers can be configured to be stand up containers. In variations of this fourth set of embodiments, any of these flexible containers can be configured to include any number of product volumes, each with a different fluent product, in any manner disclosed herein. Any part, parts, or all of any embodiment in this fourth set of embodiments can be configured according to any embodiment of the present disclosure, in any workable combination.

### BRIEF DESCRIPTION OF THE DRAWINGS

Figure 1A illustrates a front view of an embodiment of a stand up flexible container.
Figure 1B illustrates a side view of the stand up flexible container of Figure 1A.
Figure 1C illustrates a top view of the stand up flexible container of Figure 1A.
Figure 1D illustrates a bottom view of the stand up flexible container of Figure 1A.
Figure 2A illustrates a top view of a stand up flexible container having a structural support frame that has an overall shape like a frustum.
Figure 2B illustrates a front view of the container of Figure 2A.
Figure 2C illustrates a side view of the container of Figure 2A.
Figure 2D illustrates an isometric view of the container of Figure 2A.
Figure 3A illustrates a top view of a stand up flexible container having a structural support frame that has an overall shape like a pyramid.
Figure 3B illustrates a front view of the container of Figure 3A.
Figure 3C illustrates a side view of the container of Figure 3A.
Figure 3D illustrates an isometric view of the container of Figure 3A.
Figure 4A illustrates a top view of a stand up flexible container having a structural support frame that has an overall shape like a trigonal prism.
Figure 4B illustrates a front view of the container of Figure 4A.
Figure 4C illustrates a side view of the container of Figure 4A.
Figure 4D illustrates an isometric view of the container of Figure 4A.
Figure 5A illustrates a top view of a stand up flexible container having a structural support frame that has an overall shape like a tetragonal prism.
Figure 5B illustrates a front view of the container of Figure 5A.
Figure 5C illustrates a side view of the container of Figure 5A.
Figure 5D illustrates an isometric view of the container of Figure 5A.
Figure 6A illustrates a top view of a stand up flexible container having a structural support frame that has an overall shape like a pentagonal prism.
Figure 6B illustrates a front view of the container of Figure 6A.
Figure 6C illustrates a side view of the container of Figure 6A.
Figure 6D illustrates an isometric view of the container of Figure 6A.
Figure 7A illustrates a top view of a stand up flexible container having a structural support frame that has an overall shape like a cone.
Figure 7B illustrates a front view of the container of Figure 7A.
Figure 7C illustrates a side view of the container of Figure 7A.
Figure 7D illustrates an isometric view of the container of Figure 7A.
Figure 8A illustrates a top view of a stand up flexible container having a structural support frame that has an overall shape like a cylinder.
Figure 8B illustrates a front view of the container of Figure 8A.
Figure 8C illustrates a side view of the container of Figure 8A.
Figure 8D illustrates an isometric view of the container of Figure 8A.
Figure 9A illustrates a top view of an embodiment of a self-supporting flexible container, having an overall shape like a square.
Figure 9B illustrates an end view of the flexible container of Figure 9A.
Figure 10A illustrates a top view of an embodiment of a self-supporting flexible container, having an overall shape like a triangle.
Figure 10B illustrates an end view of the flexible container of Figure 10A.
Figure 11A illustrates a top view of an embodiment of a self-supporting flexible container, having an overall shape like a circle.
Figure 11B illustrates an end view of the flexible container of Figure 11A.
Figure 12A illustrates an isometric view of push-pull type dispenser.
Figure 12B illustrates an isometric view of dispenser with a flip-top cap.
Figure 12C illustrates an isometric view of dispenser with a screw-on cap.
Figure 12D illustrates an isometric view of rotatable type dispenser.
Figure 12E illustrates an isometric view of nozzle type dispenser with a cap.
Figure 13A illustrates an isometric view of straw dispenser.
Figure 13B illustrates an isometric view of straw dispenser with a lid.
Figure 13C illustrates an isometric view of flip up straw dispenser.
Figure 13D illustrates an isometric view of straw dispenser with bite valve.
Figure 14A illustrates an isometric view of pump type dispenser.
Figure 14B illustrates an isometric view of pump spray type dispenser.
Figure 14C illustrates an isometric view of trigger spray type dispenser.
Figure 15A illustrates a front view of an embodiment of a stand up flexible container having a structural support frame and two product volumes disposed side by side, separated by a vertical wall, with dispensers on the top or bottom of the container.
Figure 15B illustrates a side view of the stand up flexible container of Figure 15A.
Figure 16A illustrates a front view of an embodiment of a stand up flexible container having a structural support frame and three product volumes disposed side by side, separated by vertical walls, with dispensers on the top or bottom of the container.
Figure 16B illustrates a side view of the stand up flexible container of Figure 16A.
Figure 17A illustrates a front view of an embodiment of a stand up flexible container having a structural support frame and two product volumes disposed side by side, separated by a vertical wall, with dispensers on the front or back of the container.
Figure 17B illustrates a side view of the stand up flexible container of Figure 17A.
Figure 18A illustrates a front view of an embodiment of a stand up flexible container having a structural support frame and two product volumes disposed side by side, separated by a vertical wall, with dispensers on the sides of the container.
Figure 18B illustrates a side view of the stand up flexible container of Figure 18A.
Figure 19A illustrates a front view of an embodiment of a stand up flexible container having a structural support frame and two product volumes disposed side by side, separated by an angled wall, with dispensers on the sides of the container.
Figure 19B illustrates a side view of the stand up flexible container of Figure 19A.
Figure 20A illustrates a front view of an embodiment of a stand up flexible container having a structural support frame and two product volumes disposed side by side, separated by a vertical wall, with a parallel dispenser on the top or bottom of the container.
Figure 20B illustrates a side view of the stand up flexible container of Figure 20A.
Figure 21A illustrates a front view of an embodiment of a stand up flexible container having a structural support frame and two product volumes disposed side by side, separated by a vertical wall, with a parallel dispenser on the front or back of the container.
Figure 21B illustrates a side view of the stand up flexible container of Figure 21A.
Figure 22A illustrates a front view of an embodiment of a stand up flexible container having a structural support frame and two product volumes disposed side by side, separated by a vertical wall, with a mixing dispenser on the top or bottom of the container.
Figure 22B illustrates a side view of the stand up flexible container of Figure 22A.
Figure 23A illustrates a front view of an embodiment of a stand up flexible container having a structural support frame and two product volumes disposed side by side, separated by a vertical wall, a mixing volume, and with a dispenser on the top or bottom of the container.
Figure 23B illustrates a side view of the stand up flexible container of Figure 23A.
Figure 24A illustrates a front view of an embodiment of a stand up flexible container having a structural support frame and two product volumes disposed front to back, separated by a vertical wall, with dispensers on the top or bottom of the container.
Figure 24B illustrates a side view of the stand up flexible container of Figure 24A.
Figure 25A illustrates a front view of an embodiment of a stand up flexible container having a structural support frame and two product volumes disposed front to back, separated by a vertical wall, with dispensers on the front and the back of the container.
Figure 25B illustrates a side view of the stand up flexible container of Figure 25A.
Figure 26A illustrates a front view of an embodiment of a stand up flexible container having a structural support frame and two product volumes disposed front to back, separated by an angled wall, with dispensers on the front or back of the container.
Figure 26B illustrates a side view of the stand up flexible container of Figure 26A.
Figure 27A illustrates a front view of an embodiment of a stand up flexible container having a structural support frame and two product volumes disposed front to back, separated by a vertical wall, with dispensers on the sides of the container.
Figure 27B illustrates a side view of the stand up flexible container of Figure 27A.
Figure 28A illustrates a front view of an embodiment of a stand up flexible container having a structural support frame and two product volumes disposed front to back, separated by a vertical wall, with a parallel dispenser on the top or bottom of the container.
Figure 28B illustrates a side view of the stand up flexible container of Figure 28A.
Figure 29A illustrates a front view of an embodiment of a stand up flexible container having a structural support frame and three product volumes disposed front to back, separated by vertical walls, with a parallel dispenser on the top or bottom of the container.
Figure 29B illustrates a side view of the stand up flexible container of Figure 29A.
Figure 30A illustrates a front view of an embodiment of a stand up flexible container having a structural support frame and two product volumes disposed front to back, separated by a vertical wall, and with a parallel dispenser on the side of the container.
Figure 30B illustrates a side view of the stand up flexible container of Figure 30A.
Figure 31A illustrates a front view of an embodiment of a stand up flexible container having a structural support frame and two product volumes disposed front to back, separated by a vertical wall, and with a mixing dispenser on the top or bottom of the container.
Figure 31B illustrates a side view of the stand up flexible container of Figure 31A.
Figure 32A illustrates a front view of an embodiment of a stand up flexible container having a structural support frame and two product volumes disposed front to back, separated by a vertical wall, a mixing volume, and with dispensers on the top or bottom of the container.
Figure 32B illustrates a side view of the stand up flexible container of Figure 32A.
Figure 33A illustrates a front view of an embodiment of a stand up flexible container having a structural support frame and two product volumes disposed top to bottom, separated by a horizontal wall, and with dispensers on the side of the container.
Figure 33B illustrates a side view of the stand up flexible container of Figure 33A.
Figure 34A illustrates a front view of an embodiment of a stand up flexible container having a structural support frame and two product volumes disposed top to bottom, separated by an angled wall, and with dispensers on the sides of the container.
Figure 34B illustrates a side view of the stand up flexible container of Figure 34A.
Figure 35A illustrates a front view of an embodiment of a stand up flexible container having a structural support frame and three product volumes disposed top to bottom, separated by horizontal walls, and with dispensers on the sides of the container.
Figure 35B illustrates a side view of the stand up flexible container of Figure 35A.
Figure 36A illustrates a front view of an embodiment of a stand up flexible container having a structural support frame and two product volumes disposed top to bottom, separated by a horizontal wall, and with a parallel dispenser on the side of the container.
Figure 36B illustrates a side view of the stand up flexible container of Figure 36A.
Figure 37A illustrates a front view of an embodiment of a stand up flexible container having a structural support frame and two product volumes disposed top to bottom, separated by a horizontal wall, and with a parallel dispenser on the front or back of the container.
Figure 37B illustrates a side view of the stand up flexible container of Figure 37A.
Figure 38A illustrates a front view of an embodiment of a stand up flexible container having a structural support frame and two product volumes disposed top to bottom, separated by a horizontal wall, and with a mixing dispenser on the side of the container.
Figure 38B illustrates a side view of the stand up flexible container of Figure 38A.
Figure 39A illustrates a front view of an embodiment of a stand up flexible container having a structural support frame and two product volumes disposed top to bottom, separated by a horizontal wall, a mixing volume, and a dispenser on the side of the container.
Figure 39B illustrates a side view of the stand up flexible container of Figure 39A.
Figure 40 illustrates a top view of an embodiment of a self-supporting flexible container having a structural support frame and two product volumes disposed side by side, adjacent to each other, separated by a seal, wherein one structural support frame supports both product volumes, and there is a dispenser for each product volume.
Figure 41 illustrates a top view of another embodiment of a self-supporting flexible container having a structural support frame and two product volumes disposed side by side, adjacent to each other, wherein one structural support frame supports both product volumes, and there is a dispenser for each product volume.
Figure 42 illustrates a top view of an embodiment of a self-supporting flexible container having a structural support frame and two product volumes disposed side by side, spaced apart from each other, wherein one structural support frame supports both product volumes, and there is a dispenser for each product volume.
Figure 43 illustrates a top view of an embodiment of an article of manufacture having two self-supporting flexible containers, disposed side by side, wherein each container has a separate structural support frame that supports a product volume that has a dispenser, and the containers are directly connected.
Figure 44 illustrates a top view of an embodiment of an article of manufacture having two self-supporting flexible containers, disposed side by side, wherein each container has a separate structural support frame that supports a product volume that has a dispenser, and the containers are joined together.
Figure 45 illustrates a top view of an embodiment of an article of manufacture having three self-supporting flexible containers, disposed face on top of each other, wherein each container has a separate structural support frame that supports a product volume that has a dispenser, and the containers are directly connected.

### DETAILED DESCRIPTION

The present disclosure describes various embodiments of containers made from flexible material. Because these containers are made from flexible material, these containers can be less expensive to make, can use less material, and can be easier to decorate, when compared with conventional rigid containers. First, these containers can be less expensive to make, because the conversion of flexible materials (from sheet form to finished goods) generally requires less energy and complexity, than formation of rigid materials (from bulk form to finished goods). Second, these containers can use less material, because they are configured with novel support structures that do not require the use of the thick solid walls used in conventional rigid containers. Third, these flexible containers can be easier to decorate, because their flexible materials can be easily printed before they are formed into containers. Fourth, these flexible containers can be less prone to scuffing, denting, and rupture, because flexible materials allow their outer surfaces to deform when contacting surfaces and objects, and then to bounce back. Fifth, fluent products in these flexible containers can be more readily and carefully dispensed, because the sides of flexible containers can be more easily and controllably squeezed by human hands.

Even though the containers of the present disclosure are made from flexible material, they can be configured with sufficient structural integrity, such that they can receive, contain, and dispense fluent product(s), as intended, without failure. Also, these containers can be configured with sufficient structural integrity, such that they can withstand external forces and environmental conditions from handling, without failure. Further, these containers can be configured with structures that allow them to be displayed for sale and put into use, as intended, without failure.

As used herein, the term "about" modifies a particular value, by referring to a range equal to the particular value, plus or minus twenty percent (+/- 20%). For any of the embodiments of flexible containers, disclosed herein, any disclosure of a particular value, can, in various alternate embodiments, also be understood as a disclosure of a range equal to about that particular value (i.e. +/- 20%).

As used herein, the term "ambient conditions" refers to a temperature within the range of 15-35 degrees Celsius and a relative humidity within the range of 35-75%.

As used herein, the term "approximately" modifies a particular value, by referring to a range equal to the particular value, plus or minus fifteen percent (+/- 15%). For any of the embodiments of flexible containers, disclosed herein, any disclosure of a particular value, can, in various alternate embodiments, also be understood as a disclosure of a range equal to approximately that particular value (i.e. +/- 15%).

As used herein, when referring to a sheet of material, the term "basis weight" refers to a measure of mass per area, in units of grams per square meter (gsm). For any of the embodiments of flexible containers, disclosed herein, in various embodiments, any of the flexible materials can be configured to have a basis weight of 10-1000 gsm, or any integer value for gsm from 10-1000, or within any range formed by any of these values, such as 20-800 gsm, 30-600 gsm, 40-400 gsm, or 50-200, etc.

As used herein, when referring to a flexible container, the term "bottom" refers to the portion of the container that is located in the lowermost 30% of the overall height of the container, that is, from 0-30% of the overall height of the container. As used herein, the term bottom can be further limited by modifying the term bottom with a particular percentage value, which is less than 30%. For any of the embodiments of flexible containers, disclosed herein, a reference to the bottom of the container can, in various alternate embodiments, refer to the bottom 25% (i.e. from 0-25% of the overall height), the bottom 20% (i.e. from 0-20% of the overall height), the bottom 15% (i.e. from 0-15% of the overall height), the bottom 10% (i.e. from 0-10% of the overall height), or the bottom 5% (i.e. from 0-5% of the overall height), or any integer value for percentage between 0% and 30%.

As used herein, the term "branding" refers to a visual element intended to distinguish a product from other products. Examples of branding include one of more of any of the following: trademarks, trade dress, logos, icons, and the like. For any of the embodiments of flexible containers, disclosed herein, in various embodiments, any surface of the flexible container can include one or more brandings of any size, shape, or configuration, disclosed herein or known in the art, in any combination.

As used herein, the term "character" refers to a visual element intended to convey information. Examples of characters include one or more of any of the following: letters, numbers, symbols, and the like. For any of the embodiments of flexible containers, disclosed herein, in various embodiments, any surface of the flexible container can include one or more characters of any size, shape, or configuration, disclosed herein or known in the art, in any combination.

As used herein, the term "closed" refers to a state of a product volume, wherein fluent products within the product volume are prevented from escaping the product volume (e.g. by one or more materials that form a barrier, and by a cap), but the product volume is not necessarily hermetically sealed. For example, a closed container can include a vent, which allows a head space in the container to be in fluid communication with air in the environment outside of the container.

As used herein, the term "directly connected" refers to a configuration wherein elements are attached to each other without any intermediate elements therebetween, except for any means of attachment (e.g. adhesive).

As used herein, when referring to a flexible container, the term "dispenser" refers to a structure configured to dispense fluent product(s) from a product volume and/or from a mixing volume to the environment outside of the container. For any of the flexible containers disclosed herein, any dispenser can be configured in any way disclosed herein or known in the art, including any suitable size, shape, and flow rate. For example, a dispenser can be a push-pull type dispenser, a dispenser with a flip-top cap, a dispenser with a screw-on cap, a rotatable type dispenser, dispenser with a cap, a pump type dispenser, a pump spray type dispenser, a trigger spray type dispenser, a straw dispenser, a flip up straw dispenser, a straw dispenser with bite valve, a dosing dispenser, etc. A dispenser can be a parallel dispenser, providing multiple flow channels in fluid communication with multiple product volumes, wherein those flow channels remain separate until the point of dispensing, thus allowing fluent products from multiple product volumes to be dispensed as separate fluent products, dispensed together at the same time. A dispenser can be a mixing dispenser, providing one or more flow channels in fluid communication with multiple product volumes, with multiple flow channels combined before the point of dispensing, thus allowing fluent products from multiple product volumes to be dispensed as the fluent products mixed together. As another example, a dispenser can be formed by a frangible opening. As further examples, a dispenser can utilize one or more valves and/or dispensing mechanisms disclosed in the art, such as those disclosed in: published US patent application 2003/0096068, entitled "One-way valve for inflatable package"; US patent 4,988,016 entitled "Self-sealing container"; and US 7,207,717, entitled "Package having a fluid actuated closure". Still further, any of the dispensers disclosed herein, may be incorporated into a flexible container either directly, or in combination with one or more other materials or structures (such as a fitment), or in any way known in the art. In some alternate embodiments, dispensers disclosed herein can be configured for both dispensing and filling, to allow filling of product volume(s) through one or more dispensers. In other alternate embodiments, a product volume can include one or more filling structure(s) (e.g. for adding water to a mixing volume) in addition to or instead of one or more dispenser(s). Any location for a dispenser, disclosed herein can alternatively be used as a location for a filling structure.

As used herein, when referring to a flexible container, the term "disposable" refers to a container which, after dispensing a product to an end user, is not configured to be refilled with an additional amount of the product, but is configured to be disposed of (i.e. as waste, compost, and/or recyclable material). Part, parts, or all of any of the embodiments of flexible containers, disclosed herein, can be configured to be disposable.

As used herein, when referring to a flexible container, the term "durable" refers to a container that is reusable more than non-durable containers.

As used herein, when referring to a flexible container, the term "effective base contact area" refers to a particular area defined by a portion of the bottom of the container, when the container (with all of its product volume(s) filled 100% with water) is standing upright and its bottom is resting on a horizontal support surface. The effective base contact area lies in a plane defined by the horizontal support surface. The effective base contact area is a continuous area bounded on all sides by an outer periphery.

The outer periphery is formed from an actual contact area and from a series of projected areas from defined cross-sections taken at the bottom of the container. The actual contact area is the one or more portions of the bottom of the container that contact the horizontal support surface, when the effective base contact area is defined. The effective base contact area includes all of the actual contact area. However, in some embodiments, the effective base contact area may extend beyond the actual contact area.

The series of projected area are formed from five horizontal cross-sections, taken at the bottom of the flexible container. These cross-sections are taken at 1%, 2%, 3%, 4%, and 5% of the overall height. The outer extent of each of these cross-sections is projected vertically downward onto the horizontal support surface to form five (overlapping) projected areas, which, together with the actual contact area, form a single combined area. This is not a summing up of the values for these areas, but is the formation of a single combined area that includes all of these (projected and actual) areas, overlapping each other, wherein any overlapping portion makes only one contribution to the single combined area.

The outer periphery of the effective base contact area is formed as described below. In the following description, the terms convex, protruding, concave, and recessed are understood from the perspective of points outside of the combined area. The outer periphery is formed by a combination of the outer extent of the combined area and any chords, which are straight line segments constructed as described below.

For each continuous portion of the combined area that has an outer perimeter with a shape that is concave or recessed, a chord is constructed across that portion. This chord is the shortest straight line segment that can be drawn tangent to the combined area on both sides of the concave/recessed portion.

For a combined area that is discontinuous (formed by two or more separate portions), one or more chords are constructed around the outer perimeter of the combined area, across the one or more discontinuities (open spaces disposed between the portions). These chords are straight lines segments drawn tangent to the outermost separate portions of the combined area. These chords are drawn to create the largest possible effective base contact area.

Thus, the outer periphery is formed by a combination of the outer extent of the combined area and any chords, constructed as described above, which all together enclose the effective base area. Any chords that are bounded by the combined area and/or one or more other chords, are not part of the outer periphery and should be ignored.

Any of the embodiments of flexible containers, disclosed herein, can be configured to have an effective base contact area from 1 to 50,000 square centimeters (cm²), or any integer value for cm² between 1 and 50,000 cm², or within any range formed by any of the preceding values, such as: from 2 to 25,000 cm², 3 to 10,000 cm², 4 to 5,000 cm², 5 to 2,500 cm², from 10 to 1,000 cm², from 20 to 500 cm², from 30 to 300 cm², from 40 to 200 cm², or from 50 to 100 cm², etc.

As used herein, when referring to a flexible container, the term "expanded" refers to the state of one or more flexible materials that are configured to be formed into a structural support volume, after the structural support volume is made rigid by one or more expansion materials. An expanded structural support volume has an overall width that is significantly greater than the combined thickness of its one or more flexible materials, before the structural support volume is filled with the one or more expansion materials. Examples of expansion materials include liquids (e.g. water), gases (e.g. compressed air), fluent products, foams (that can expand after being added into a structural support volume), co-reactive materials (that produce gas), or phase change materials (that can be added in solid or liquid form, but which turn into a gas; for example, liquid nitrogen or dry ice), or other suitable materials known in the art, or combinations of any of these (e.g. fluent product and liquid nitrogen). In various embodiments, expansion materials can be added at atmospheric pressure, or added under pressure greater than atmospheric pressure, or added to provide a material change that will increase pressure to something above atmospheric pressure. For any of the embodiments of flexible containers, disclosed herein, its one or more flexible materials can be expanded at various points in time, with respect to its manufacture, sale, and use, including, for example: before or after its product volume(s) are filled with fluent product(s), before or after the flexible container is shipped to a seller, and before or after the flexible container is purchased by an end user.

As used herein, when referring to a product volume of a flexible container, the term "filled" refers to the state when the product volume contains an amount of fluent product(s) that is equal to a full capacity for the product volume, with an allowance for head space, under ambient conditions. As used herein, the term filled can be modified by using the term filled with a particular percentage value, wherein 100% filled represents the maximum capacity of the product volume.

As used herein, the term "flat" refers to a surface that is without significant projections or depressions.

As used herein, the term "flexible container" refers to a container configured to have a product volume, wherein one or more flexible materials form 50-100% of the overall surface area of the one or more materials that define the three-dimensional space of the product volume. For any of the embodiments of flexible containers, disclosed herein, in various embodiments, the flexible container can be configured to have a product volume, wherein one or more flexible materials form a particular percentage of the overall area of the one or more materials that define the three-dimensional space, and the particular percentage is any integer value for percentage between 50% and 100%, or within any range formed by any of these values, such as: 60-100%, or 70-100%, or 80-100%, or 90-100%, etc. One kind of flexible container is a film-based container, which is a flexible container made from one or more flexible materials, which include a film.

For any of the embodiments of flexible containers, disclosed herein, in various embodiments, the middle of the flexible container (apart from any fluent product) can be configured to have an overall middle mass, wherein one or more flexible materials form a particular percentage of the overall middle mass, and the particular percentage is any integer value for percentage between 50% and 100%, or within any range formed by any of the preceding values, such as: 60-100%, or 70-100%, or 80-100%, or 90-100%, etc.

For any of the embodiments of flexible containers, disclosed herein, in various embodiments, the entire flexible container (apart from any fluent product) can be configured to have an overall mass, wherein one or more flexible materials form a particular percentage of the overall mass, and the particular percentage is any integer value for percentage between 50% and 100%, or within any range formed by any of the preceding values, such as: 60-100%, or 70-100%, or 80-100%, or 90-100%, etc.

As used herein, when referring to a flexible container, the term "flexible material" refers to a thin, easily deformable, sheet-like material, having a flexibility factor within the range of 1,000-2,500,000 N/m. For any of the embodiments of flexible containers, disclosed herein, in various embodiments, any of the flexible materials can be configured to have a flexibility factor of 1,000-2,500,000 N/m, or any integer value for flexibility factor from 1,000-2,500,000 N/m, or within any range formed by any of these values, such as 1,000-1,500,000 N/m, 1,500-1,000,000 N/m, 2,500-800,000 N/m, 5,000-700,000 N/m, 10,000-600,000 N/m, 15,000-500,000 N/m, 20,000-400,000 N/m, 25,000-300,000 N/m, 30,000-200,000 N/m, 35,000-100,000 N/m, 40,000-90,000 N/m, or 45,000-85,000 N/m, etc. Throughout the present disclosure the terms "flexible material", "flexible sheet", "sheet", and "sheet-like material" are used interchangeably and are intended to have the same meaning. Examples of materials that can be flexible materials include one or more of any of the following: films (such as plastic films), elastomers, foamed sheets, foils, fabrics (including wovens and nonwovens), biosourced materials, and papers, in any configuration, as separate material(s), or as layer(s) of a laminate, or as part(s) of a composite material, in a microlayered or nanolayered structure, and in any combination, as described herein or as known in the art. In various embodiments, part, parts, or all of a flexible material can be coated or uncoated, treated or untreated, processed or unprocessed, in any manner known in the art. In various embodiments, parts, parts, or about all, or approximately all, or substantially all, or nearly all, or all of a flexible material can made of sustainable, bio-sourced, recycled, recyclable, and/or biodegradable material. Part, parts, or about all, or approximately all, or substantially all, or nearly all, or all of any of the flexible materials described herein can be partially or completely translucent, partially or completely transparent, or partially or completely opaque. The flexible materials used to make the containers disclosed herein can be formed in any manner known in the art, and can be joined together using any kind of joining or sealing method known in the art, including, for example, heat sealing (e.g. conductive sealing, impulse sealing, ultrasonic sealing, etc.), welding, crimping, bonding, adhering, and the like, and combinations of any of these.

As used herein, when referring to a flexible container, the term "flexibility factor" refers to a material parameter for a thin, easily deformable, sheet-like material, wherein the parameter is measured in Newtons per meter, and the flexibility factor is equal to the product of the value for the Young's modulus of the material (measured in Pascals) and the value for the overall thickness of the material (measured in meters).

As used herein, when referring to a flexible container, the term "fluent product" refers to one or more liquids and/or pourable solids, and combinations thereof. Examples of fluent products include one or more of any of the following: bites, bits, creams, chips, chunks, crumbs, crystals, emulsions, flakes, gels, grains, granules, jellies, kibbles, liquid solutions, liquid suspensions, lotions, nuggets, ointments, particles, particulates, pastes, pieces, pills, powders, salves, shreds, sprinkles, and the like, either individually or in any combination. Throughout the present disclosure the terms "fluent product" and "flowable product" are used interchangeably and are intended to have the same meaning. Any of the product volumes disclosed herein can be configured to include one or more of any fluent product disclosed herein, or known in the art, in any combination.

As used herein, when referring to a flexible container, the term "formed" refers to the state of one or more materials that are configured to be formed into a product volume, after the product volume is provided with its defined three-dimensional space.

As used herein, the term "graphic" refers to a visual element intended to provide a decoration or to communicate information. Examples of graphics include one or more of any of the following: colors, patterns, designs, images, and the like. For any of the embodiments of flexible containers, disclosed herein, in various embodiments, any surface of the flexible container can include one or more graphics of any size, shape, or configuration, disclosed herein or known in the art, in any combination.

As used herein, when referring to a flexible container, the term "height area ratio" refers to a ratio for the container, with units of per centimeter (cm⁻¹), which is equal to the value for the overall height of the container (with all of its product volume(s) filled 100% with water, and with overall height measured in centimeters) divided by the value for the effective base contact area of the container (with all of its product volume(s) filled 100% with water, and with effective base contact area measured in square centimeters). For any of the embodiments of flexible containers, disclosed herein, in various embodiments, any of the flexible containers, can be configured to have a height area ratio from 0.3 to 3.0 per centimeter, or any value in increments of 0.05 cm⁻¹ between 0.3 and 3.0 per centimeter, or within any range formed by any of the preceding values, such as: from 0.35 to 2.0 cm⁻¹, from 0.4 to 1.5 cm⁻¹, from 0.4 to 1.2 cm⁻¹, or from 0.45 to 0.9 cm⁻¹, etc.

As used herein, the term "indicia" refers to one or more of characters, graphics, branding, or other visual elements, in any combination. For any of the embodiments of flexible containers, disclosed herein, in various embodiments, any surface of the flexible container can include one or more indicia of any size, shape, or configuration, disclosed herein or known in the art, in any combination.

As used herein, the term "indirectly connected" refers to a configuration wherein elements are attached to each other with one or more intermediate elements therebetween.

As used herein, the term "joined" refers to a configuration wherein elements are either directly connected or indirectly connected.

As used herein, the term "lateral" refers to a direction, orientation, or measurement that is parallel to a lateral centerline of a container, when the container is standing upright on a horizontal support surface, as described herein. A lateral orientation may also be referred to a "horizontal" orientation, and a lateral measurement may also be referred to as a "width."

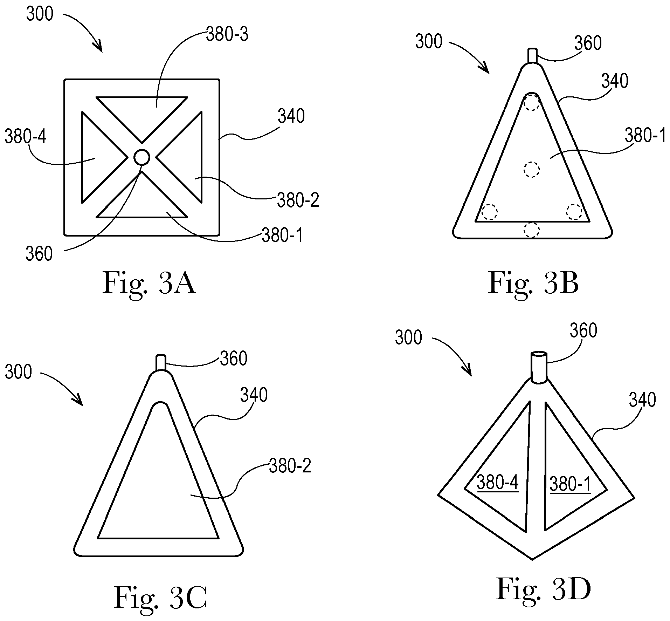

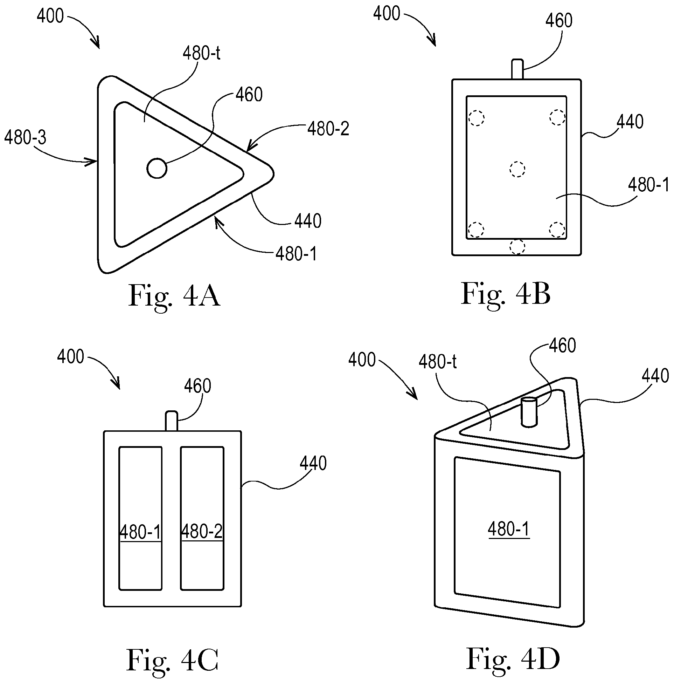

As used herein, the term "like-numbered" refers to similar alphanumeric labels for corresponding elements, as described below. Like-numbered elements have labels with the same last two digits; for example, one element with a label ending in the digits 20 and another element with a label ending in the digits 20 are like-numbered. Like-numbered elements can have labels with a differing first digit, wherein that first digit matches the number for its figure; as an example, an element of Figure 3 labeled 320 and an element of Figure 4 labeled 420 are like-numbered. Like-numbered elements can have labels with a suffix (i.e. the portion of the label following the dash symbol) that is the same or possibly different (e.g. corresponding with a particular embodiment); for example, a first embodiment of an element in Figure 3A labeled 320-a and a second embodiment of an element in Figure 3B labeled 320-b, are like numbered.

As used herein, the term "longitudinal" refers to a direction, orientation, or measurement that is parallel to a longitudinal centerline of a container, when the container is standing upright on a horizontal support surface, as described herein. A longitudinal orientation may also be referred to a "vertical" orientation. When expressed in relation to a horizontal support surface for a container, a longitudinal measurement may also be referred to as a "height", measured above the horizontal support surface.

As used herein, when referring to a flexible container, the term "middle" refers to the portion of the container that is located in between the top of the container and the bottom of the container. As used herein, the term middle can be modified by describing the term middle with reference to a particular percentage value for the top and/or a particular percentage value for the bottom. For any of the embodiments of flexible containers, disclosed herein, a reference to the middle of the container can, in various alternate embodiments, refer to the portion of the container that is located between any particular percentage value for the top, disclosed herein, and/or any particular percentage value for the bottom, disclosed herein, in any combination.

As used herein, the term "mixing volume" refers to a type product volume that is configured to receive one or more fluent product(s) from one or more product volumes and/or from the environment outside of the container.

As used herein, when referring to a product volume, the term "multiple dose" refers to a product volume that is sized to contain a particular amount of product that is about equal to two or more units of typical consumption, application, or use by an end user. Any of the embodiments of flexible containers, disclosed herein, can be configured to have one or more multiple dose product volumes. A container with only one product volume, which is a multiple dose product volume, is referred to herein as a "multiple dose container."

As used herein, the term "nearly" modifies a particular value, by referring to a range equal to the particular value, plus or minus five percent (+/- 5%). For any of the embodiments of flexible containers, disclosed herein, any disclosure of a particular value, can, in various alternate embodiments, also be understood as a disclosure of a range equal to approximately that particular value (i.e. +/- 5%).

As used herein, when referring to a flexible container, the term "non-durable" refers to a container that is temporarily reusable, or disposable, or single use.

As used herein, when referring to a flexible container, the term "overall height" refers to a distance that is measured while the container is standing upright on a horizontal support surface, the distance measured vertically from the upper side of the support surface to a point on the top of the container, which is farthest away from the upper side of the support surface. Any of the embodiments of flexible containers, disclosed herein, can be configured to have an overall height from 2.0 cm to 100.0 cm, or any value in increments of 0.1 cm between 2.0 and 100.0 cm, or within any range formed by any of the preceding values, such as: from 4.0 to 90.0 cm, from 5.0 to 80.0 cm, from 6.0 to 70.0 cm, from 7.0 to 60.0 cm, from 8.0 to 50.0 cm, from 9.0 to 40.0 cm, or from 10.0 to 30.0, etc.

As used herein, when referring to a sheet of flexible material, the term "overall thickness" refers to a linear dimension measured perpendicular to the outer major surfaces of the sheet, when the sheet is lying flat. For any of the embodiments of flexible containers, disclosed herein, in various embodiments, any of the flexible materials can be configured to have an overall thickness 5-500 micrometers (µm), or any integer value for micrometers from 5-500, or within any range formed by any of these values, such as 10-500 µm, 20-400 µm, 30-300 µm, 40-200 µm, or 50-100 µm, etc.

As used herein, the term "product volume" refers to an enclosable three-dimensional space that is configured to receive and directly contain one or more fluent product(s), wherein that space is defined by one or more materials that form a barrier that prevents the fluent product(s) from escaping the product volume. By directly containing the one or more fluent products, the fluent products come into contact with the materials that form the enclosable three-dimensional space; there is no intermediate material or container, which prevents such contact. Throughout the present disclosure the terms "product volume" and "product receiving volume" are used interchangeably and are intended to have the same meaning. Any of the embodiments of flexible containers, disclosed herein, can be configured to have any number of product volumes including, two product volumes, three product volumes, four product volumes, five product volumes, six product volumes, or even more product volumes. In some embodiments, one or more product volumes can be enclosed within another product volume. Any of the product volumes disclosed herein can have a product volume of any size, including from 0.001 liters to 100.0 liters, or any value in increments of 0.001 liters between 0.001 liters and 3.0 liters, or any value in increments of 0.01 liters between 3.0 liters and 10.0 liters, or any value in increments of 1.0 liters between 10.0 liters and 100.0 liters, or within any range formed by any of the preceding values, such as: from 0.001 to 2.2 liters, 0.01 to 2.0 liters, 0.05 to 1.8 liters, 0.1 to 1.6 liters, 0.15 to 1.4 liters, 0.2 to 1.2 liters, 0.25 to 1.0 liters, etc. A product volume can have any shape in any orientation. A product volume can be included in a container that has a structural support frame, and a product volume can be included in a container that does not have a structural support frame.

As used herein, when referring to a flexible container, the term "resting on a horizontal support surface" refers to the container resting directly on the horizontal support surface, without other support.

As used herein, the term "sealed," when referring to a product volume, refers to a state of the product volume wherein fluent products within the product volume are prevented from escaping the product volume (e.g. by one or more materials that form a barrier, and by a seal), and the product volume is hermetically sealed.

As used herein, when referring to a flexible container, the term "self-supporting" refers to a container that includes a product volume and a structural support frame, wherein, when the container is resting on a horizontal support surface, in at least one orientation, the structural support frame is configured to prevent the container from collapsing and to give the container an overall height that is significantly greater than the combined thickness of the materials that form the container, even when the product volume is unfilled. Any of the embodiments of flexible containers, disclosed herein, can be configured to be self-supporting.

As used herein, when referring to a flexible container, the term "single use" refers to a closed container which, after being opened by an end user, is not configured to be reclosed. Any of the embodiments of flexible containers, disclosed herein, can be configured to be single use.

As used herein, when referring to a product volume, the term "single dose" refers to a product volume that is sized to contain a particular amount of product that is about equal to one unit of typical consumption, application, or use by an end user. Any of the embodiments of flexible containers, disclosed herein, can be configured to have one or more single dose product volumes. A container with only one product volume, which is a single dose product volume, is referred to herein as a "single dose container."

As used herein, when referring to a flexible container, the terms "stand up," "stands up," "standing up", "stand upright", "stands upright", and "standing upright" refer to a particular orientation of a self-supporting flexible container, when the container is resting on a horizontal support surface. This standing upright orientation can be determined from the structural features of the container and/or indicia on the container. In a first determining test, if the flexible container has a clearly defined base structure that is configured to be used on the bottom of the container, then the container is determined to be standing upright when this base structure is resting on the horizontal support surface. If the first test cannot determine the standing upright orientation, then, in a second determining test, the container is determined to be standing upright when the container is oriented to rest on the horizontal support surface such that the indicia on the flexible container are best positioned in an upright orientation. If the second test cannot determine the standing upright orientation, then, in a third determining test, the container is determined to be standing upright when the container is oriented to rest on the horizontal support surface such that the container has the largest overall height. If the third test cannot determine the standing upright orientation, then, in a fourth determining test, the container is determined to be standing upright when the container is oriented to rest on the horizontal support surface such that the container has the largest height area ratio. If the fourth test cannot determine the standing upright orientation, then, any orientation used in the fourth determining test can be considered to be a standing upright orientation.

As used herein, when referring to a flexible container, the term "stand up container" refers to a self-supporting container, wherein, when the container (with all of its product volume(s) filled 100% with water) is standing up, the container has a height area ratio from 0.4 to 1.5 cm⁻¹. Any of the embodiments of flexible containers, disclosed herein, can be configured to be stand up containers.

As used herein, when referring to a flexible container, the term "structural support frame" refers to a rigid structure formed of one or more structural support members, joined together, around one or more sizable empty spaces and/or one or more nonstructural panels, and generally used as a major support for the product volume(s) in the flexible container and in making the container self-supporting and/or standing upright. In each of the embodiments disclosed herein, when a flexible container includes a structural support frame and one or more product volumes, the structural support frame is considered to be supporting the product volumes of the container, unless otherwise indicated.

As used herein, when referring to a flexible container, the term "structural support member" refers to a rigid, physical structure, which includes one or more expanded structural support volumes, and which is configured to be used in a structural support frame, to carry one or more loads (from the flexible container) across a span. A structure that does not include at least one expanded structural support volume, is not considered to be a structural support member, as used herein.

A structural support member has two defined ends, a middle between the two ends, and an overall length from its one end to its other end. A structural support member can have one or more cross-sectional areas, each of which has an overall width that is less than its overall length.

A structural support member can be configured in various forms. A structural support member can include one, two, three, four, five, six or more structural support volumes, arranged in various ways. For example, a structural support member can be formed by a single structural support volume. As another example, a structural support member can be formed by a plurality of structural support volumes, disposed end to end, in series, wherein, in various embodiments, part, parts, or about all, or approximately all, or substantially all, or nearly all, or all of some or all of the structural support volumes can be partly or fully in contact with each other, partly or fully directly connected to each other, and/or partly or fully joined to each other. As a further example, a structural support member can be formed by a plurality of support volumes disposed side by side, in parallel, wherein, in various embodiments, part, parts, or about all, or approximately all, or substantially all, or nearly all, or all of some or all of the structural support volumes can be partly or fully in contact with each other, partly or fully directly connected to each other, and/or partly or fully joined to each other.

In some embodiments, a structural support member can include a number of different kinds of elements. For example, a structural support member can include one or more structural support volumes along with one or more mechanical reinforcing elements (e.g. braces, collars, connectors, joints, ribs, etc.), which can be made from one or more rigid (e.g. solid) materials.

Structural support members can have various shapes and sizes. Part, parts, or about all, or approximately all, or substantially all, or nearly all, or all of a structural support member can be straight, curved, angled, segmented, or other shapes, or combinations of any of these shapes. Part, parts, or about all, or approximately all, or substantially all, or nearly all, or all of a structural support member can have any suitable cross-sectional shape, such as circular, oval, square, triangular, star-shaped, or modified versions of these shapes, or other shapes, or combinations of any of these shapes. A structural support member can have an overall shape that is tubular, or convex, or concave, along part, parts, or about all, or approximately all, or substantially all, or nearly all, or all of a length. A structural support member can have any suitable cross-sectional area, any suitable overall width, and any suitable overall length. A structural support member can be substantially uniform along part, parts, or about all, or approximately all, or substantially all, or nearly all, or all of its length, or can vary, in any way described herein, along part, parts, or about all, or approximately all, or substantially all, or nearly all, or all of its length. For example, a cross-sectional area of a structural support member can increase or decrease along part, parts, or all of its length. Part, parts, or all of any of the embodiments of structural support members of the present disclosure, can be configured according to any embodiment disclosed herein, including any workable combination of structures, features, materials, and/or connections from any number of any of the embodiments disclosed herein.

As used herein, when referring to a flexible container, the term "structural support volume" refers to a fillable space made from one or more flexible materials, wherein the space is configured to be at least partially filled with one or more expansion materials, which create tension in the one or more flexible materials, and form an expanded structural support volume. One or more expanded structural support volumes can be configured to be included in a structural support member. A structural support volume is distinct from structures configured in other ways, such as: structures without a fillable space (e.g. an open space), structures made from inflexible (e.g. solid) materials, structures with spaces that are not configured to be filled with an expansion material (e.g. an unattached area between adjacent layers in a multi-layer panel), and structures with flexible materials that are not configured to be expanded by an expansion material (e.g. a space in a structure that is configured to be a non-structural panel). Throughout the present disclosure the terms "structural support volume" and "expandable chamber" are used interchangeably and are intended to have the same meaning.

In some embodiments, a structural support frame can include a plurality of structural support volumes, wherein some of or all of the structural support volumes are in fluid communication with each other. In other embodiments, a structural support frame can include a plurality of structural support volumes, wherein some of or none of the structural support volumes are in fluid communication with each other. Any of the structural support frames of the present disclosure can be configured to have any kind of fluid communication disclosed herein.

As used herein, the term "substantially" modifies a particular value, by referring to a range equal to the particular value, plus or minus ten percent (+/- 10%). For any of the embodiments of flexible containers, disclosed herein, any disclosure of a particular value, can, in various alternate embodiments, also be understood as a disclosure of a range equal to approximately that particular value (i.e. +/- 10%).

As used herein, when referring to a flexible container, the term "temporarily reusable" refers to a container which, after dispensing a product to an end user, is configured to be refilled with an additional amount of a product, up to ten times, before the container experiences a failure that renders it unsuitable for receiving, containing, or dispensing the product. As used herein, the term temporarily reusable can be further limited by modifying the number of times that the container can be refilled before the container experiences such a failure. For any of the embodiments of flexible containers, disclosed herein, a reference to temporarily reusable can, in various alternate embodiments, refer to temporarily reusable by refilling up to eight times before failure, by refilling up to six times before failure, by refilling up to four times before failure, or by refilling up to two times before failure, or any integer value for refills between one and ten times before failure. Any of the embodiments of flexible containers, disclosed herein, can be configured to be temporarily reusable, for the number of refills disclosed herein.

As used herein, the term "thickness" refers to a measurement that is parallel to a third centerline of a container, when the container is standing upright on a horizontal support surface, as described herein. A thickness may also be referred to as a "depth."

As used herein, when referring to a flexible container, the term "top" refers to the portion of the container that is located in the uppermost 20% of the overall height of the container, that is, from 80-100% of the overall height of the container. As used herein, the term top can be further limited by modifying the term top with a particular percentage value, which is less than 20%. For any of the embodiments of flexible containers, disclosed herein, a reference to the top of the container can, in various alternate embodiments, refer to the top 15% (i.e. from 85-100% of the overall height), the top 10% (i.e. from 90-100% of the overall height), or the top 5% (i.e. from 95-100% of the overall height), or any integer value for percentage between 0% and 20%.

As used herein, when referring to a flexible container, the term "unexpanded" refers to the state of one or more materials that are configured to be formed into a structural support volume, before the structural support volume is made rigid by an expansion material.

As used herein, when referring to a product volume of a flexible container, the term "unfilled" refers to the state of the product volume when it does not contain a fluent product.

As used herein, when referring to a flexible container, the term "unformed" refers to the state of one or more materials that are configured to be formed into a product volume, before the product volume is provided with its defined three-dimensional space. For example, an article of manufacture could be a container blank with an unformed product volume, wherein sheets of flexible material, with portions joined together, are laying flat against each other.

Flexible containers, as described herein, may be used across a variety of industries for a variety of products. For example, flexible containers, as described herein, may be used across the consumer products industry, including the following products: soft surface cleaners, hard surface cleaners, glass cleaners, ceramic tile cleaners, toilet bowl cleaners, wood cleaners, multi-surface cleaners, surface disinfectants, dishwashing compositions, laundry detergents, fabric conditioners, fabric dyes, surface protectants, surface disinfectants, cosmetics, facial powders, body powders, hair treatment products (e.g. mousse, hair spray, styling gels), shampoo, hair conditioner (leave-in or rinse-out), cream rinse, hair dye, hair coloring product, hair shine product, hair serum, hair anti-frizz product, hair split-end repair products, permanent waving solution, antidandruff formulation, bath gels, shower gels, body washes, facial cleaners, skin care products (e.g. sunscreen, sun block lotions, lip balm, skin conditioner, cold creams, moisturizers), body sprays, soaps, body scrubs, exfoliants, astringent, scrubbing lotions, depilatories, antiperspirant compositions, deodorants, shaving products, pre-shaving products, after shaving products, toothpaste, mouthwash, etc. As further examples, flexible containers, as described herein, may be used across other industries, including foods, beverages, pharmaceuticals, commercial products, industrial products, medical, etc.

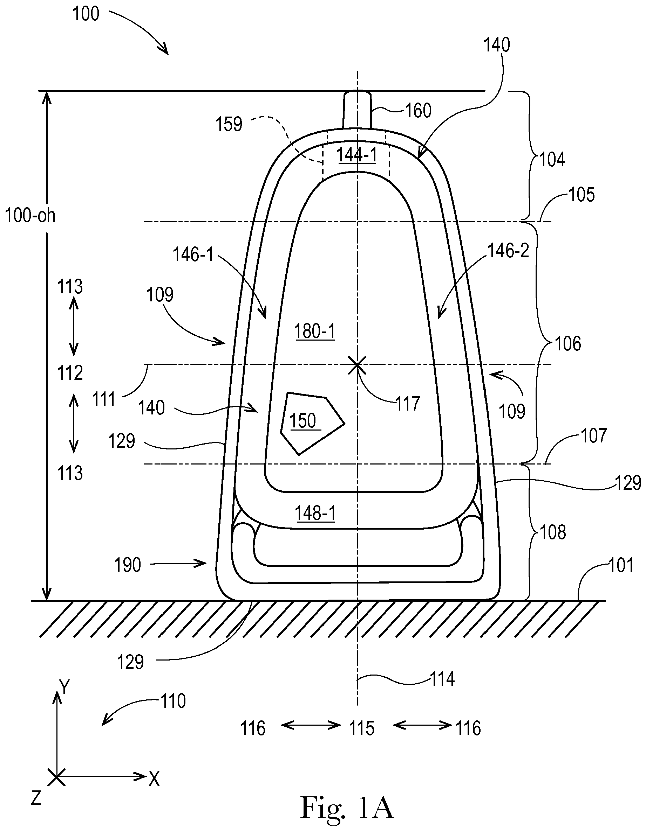

Figures 1A-1D illustrates various views of an embodiment of a stand up flexible container 100 having a single volume 150, the embodiment not forming part of the claimed invention, but representing background art useful for understanding the invention. Figure 1A illustrates a front view of the container 100. The container 100 is standing upright on a horizontal support surface 101.

In Figure 1A, a coordinate system 110, provides lines of reference for referring to directions in the figure. The coordinate system 110 is a three-dimensional Cartesian coordinate system with an X-axis, a Y-axis, and a Z-axis, wherein each axis is perpendicular to the other axes, and any two of the axes define a plane. The X-axis and the Z-axis are parallel with the horizontal support surface 101 and the Y-axis is perpendicular to the horizontal support surface 101.

Figure 1A also includes other lines of reference, for referring to directions and locations with respect to the container 100. A lateral centerline 111 runs parallel to the X-axis. An XY plane at the lateral centerline 111 separates the container 100 into a front half and a back half. An XZ plane at the lateral centerline 111 separates the container 100 into an upper half and a lower half. A longitudinal centerline 114 runs parallel to the Y-axis. A YZ plane at the longitudinal centerline 114 separates the container 100 into a left half and a right half. A third centerline 117 runs parallel to the Z-axis. The lateral centerline 111, the longitudinal centerline 114, and the third centerline 117 all intersect at a center of the container 100.

A disposition with respect to the lateral centerline 111 defines what is longitudinally inboard 112 and longitudinally outboard 113. When a first location is nearer to the lateral centerline 111 than a second location, the first location is considered to be disposed longitudinally inboard 112 to the second location. And, the second location is considered to be disposed longitudinally outboard 113 from the first location. The term lateral refers to a direction, orientation, or measurement that is parallel to the lateral centerline 111. A lateral orientation may also be referred to as a horizontal orientation, and a lateral measurement may also be referred to as a width.

A disposition with respect to the longitudinal centerline 114 defines what is laterally inboard 115 and laterally outboard 116. When a first location is nearer to the longitudinal centerline 114 than a second location, the first location is considered to be disposed laterally inboard 115 to the second location. And, the second location is considered to be disposed laterally outboard 116 from the first location. The term longitudinal refers to a direction, orientation, or measurement that is parallel to the longitudinal centerline 114. A longitudinal orientation may also be referred to a vertical orientation.

A longitudinal direction, orientation, or measurement may also be expressed in relation to a horizontal support surface for the container 100. When a first location is nearer to the support surface than a second location, the first location can be considered to be disposed lower than, below, beneath, or under the second location. And, the second location can be considered to be disposed higher than, above, or upward from the first location. A longitudinal measurement may also be referred to as a height, measured above the horizontal support surface 100.

A measurement that is made parallel to the third centerline 117 is referred to a thickness or depth. A disposition in the direction of the third centerline 117 and toward a front 102-1 of the container is referred to as forward 118 or in front of. A disposition in the direction of the third centerline 117 and toward a back 102-2 of the container is referred to as backward 119 or behind.

These terms for direction, orientation, measurement, and disposition, as described above, are used for all of the embodiments of the present disclosure, whether or not a support surface, reference line, or coordinate system is shown in a figure.

The container 100 includes a top 104, a middle 106, and a bottom 108, the front 102-1, the back 102-2, and left and right sides 109. The top 104 is separated from the middle 106 by a reference plane 105, which is parallel to the XZ plane. The middle 106 is separated from the bottom 108 by a reference plane 107, which is also parallel to the XZ plane. The container 100 has an overall height of 100-oh. In the embodiment of Figure 1A, the front 102-1 and the back 102-2 of the container are joined together at a seal 129, which extends around the outer periphery of the container 100, across the top 104, down the side 109, and then, at the bottom of each side 109, splits outward to follow the front and back portions of the base 190, around their outer extents.

The container 100 includes a structural support frame 140, a product volume 150, a dispenser 160, panels 180-1 and 180-2, and a base structure 190. A portion of panel 180-1 is illustrated as broken away, in order to show the product volume 150. The product volume 150 is configured to contain one or more fluent products. The dispenser 160 allows the container 100 to dispense these fluent product(s) from the product volume 150 through a flow channel 159 then through the dispenser 160, to the environment outside of the container 100. In the embodiment of Figures 1A-1D, the dispenser 160 is disposed in the center of the uppermost part of the top 104, however, in various alternate embodiments, the dispenser 160 can be disposed anywhere else on the top 140, middle 106, or bottom 108, including anywhere on either of the sides 109, on either of the panels 180-1 and 180-2, and on any part of the base 190 of the container 100. The structural support frame 140 supports the mass of fluent product(s) in the product volume 150, and makes the container 100 stand upright. The panels 180-1 and 180-2 are relatively flat surfaces, overlaying the product volume 150, and are suitable for displaying any kind of indicia. However, in various embodiments, part, parts, or about all, or approximately all, or substantially all, or nearly all, or all of either or both of the panels 180-1 and 180-2 can include one or more curved surfaces. The base structure 190 supports the structural support frame 140 and provides stability to the container 100 as it stands upright.

The structural support frame 140 is formed by a plurality of structural support members. The structural support frame 140 includes top structural support members 144-1 and 144-2, middle structural support members 146-1, 146-2, 146-3, and 146-4, as well as bottom structural support members 148-1 and 148-2.

The top structural support members 144-1 and 144-2 are disposed on the upper part of the top 104 of the container 100, with the top structural support member 144-1 disposed in the front 102-1 and the top structural support member 144-2 disposed in the back 102-2, behind the top structural support member 144-1. The top structural support members 144-1 and 144-2 are adjacent to each other and can be in contact with each other along the laterally outboard portions of their lengths. In various embodiments, the top structural support members 144-1 and 144-2 can be in contact with each other at one or more relatively smaller locations and/or at one or more relatively larger locations, along part, or parts, or about all, or approximately all, or substantially all, or nearly all, or all of their overall lengths, so long as there is a flow channel 159 between the top structural support members 144-1 and 144-2, which allows the container 100 to dispense fluent product(s) from the product volume 150 through the flow channel 159 then through the dispenser 160. The top structural support members 144-1 and 144-2 are not directly connected to each other. However, in various alternate embodiments, the top structural support members 144-1 and 144-2 can be directly connected and/or joined together along part, or parts, or about all, or approximately all, or substantially all, or nearly all, or all of their overall lengths.

The top structural support members 144-1 and 144-2 are disposed substantially above the product volume 150. Overall, each of the top structural support members 144-1 and 144-2 is oriented about horizontally, but with its ends curved slightly downward. And, overall each of the top structural support members 144-1 and 144-2 has a cross-sectional area that is substantially uniform along its length; however the cross-sectional area at their ends are slightly larger than the cross-sectional area in their middles.

The middle structural support members 146-1, 146-2, 146-3, and 146-4 are disposed on the left and right sides 109, from the top 104, through the middle 106, to the bottom 108. The middle structural support member 146-1 is disposed in the front 102-1, on the left side 109; the middle structural support member 146-4 is disposed in the back 102-2, on the left side 109, behind the middle structural support member 146-1. The middle structural support members 146-1 and 146-4 are adjacent to each other and can be in contact with each other along substantially all of their lengths. In various embodiments, the middle structural support members 146-1 and 146-4 can be in contact with each other at one or more relatively smaller locations and/or at one or more relatively larger locations, along part, or parts, or about all, or approximately all, or substantially all, or nearly all, or all of their overall lengths. The middle structural support members 146-1 and 146-4 are not directly connected to each other. However, in various alternate embodiments, the middle structural support members 146-1 and 146-4 can be directly connected and/or joined together along part, or parts, or about all, or approximately all, or substantially all, or nearly all, or all of their overall lengths.

The middle structural support member 146-2 is disposed in the front 102-1, on the right side 109; the middle structural support member 146-3 is disposed in the back 102-2, on the right side 109, behind the middle structural support member 146-2. The middle structural support members 146-2 and 146-3 are adjacent to each other and can be in contact with each other along substantially all of their lengths. In various embodiments, the middle structural support members 146-2 and 146-3 can be in contact with each other at one or more relatively smaller locations and/or at one or more relatively larger locations, along part, or parts, or about all, or approximately all, or substantially all, or nearly all, or all of their overall lengths. The middle structural support members 146-2 and 146-3 are not directly connected to each other. However, in various alternate embodiments, the middle structural support members 146-2 and 146-3 can be directly connected and/or joined together along part, or parts, or about all, or approximately all, or substantially all, or nearly all, or all of their overall lengths.

The middle structural support members 146-1, 146-2, 146-3, and 146-4 are disposed substantially laterally outboard from the product volume 150. Overall, each of the middle structural support members 146-1, 146-2, 146-3, and 146-4 is oriented about vertically, but angled slightly, with its upper end laterally inboard to its lower end. And, overall each of the middle structural support members 146-1, 146-2, 146-3, and 146-4 has a cross-sectional area that changes along its length, increasing in size from its upper end to its lower end.

The bottom structural support members 148-1 and 148-2 are disposed on the bottom 108 of the container 100, with the bottom structural support member 148-1 disposed in the front 102-1 and the bottom structural support member 148-2 disposed in the back 102-2, behind the top structural support member 148-1. The bottom structural support members 148-1 and 148-2 are adjacent to each other and can be in contact with each other along substantially all of their lengths. In various embodiments, the bottom structural support members 148-1 and 148-2 can be in contact with each other at one or more relatively smaller locations and/or at one or more relatively larger locations, along part, or parts, or about all, or approximately all, or substantially all, or nearly all, or all of their overall lengths. The bottom structural support members 148-1 and 148-2 are not directly connected to each other. However, in various alternate embodiments, the bottom structural support members 148-1 and 148-2 can be directly connected and/or joined together along part, or parts, or about all, or approximately all, or substantially all, or nearly all, or all of their overall lengths.

The bottom structural support members 148-1 and 148-2 are disposed substantially below the product volume 150, but substantially above the base structure 190. Overall, each of the bottom structural support members 148-1 and 148-2 is oriented about horizontally, but with its ends curved slightly upward. And, overall each of the bottom structural support members 148-1 and 148-2 has a cross-sectional area that is substantially uniform along its length.

In the front portion of the structural support frame 140, the left end of the top structural support member 144-1 is joined to the upper end of the middle structural support member 146-1; the lower end of the middle structural support member 146-1 is joined to the left end of the bottom structural support member 148-1; the right end of the bottom structural support member 148-1 is joined to the lower end of the middle structural support member 146-2; and the upper end of the middle structural support member 146-2 is joined to the right end of the top structural support member 144-1. Similarly, in the back portion of the structural support frame 140, the left end of the top structural support member 144-2 is joined to the upper end of the middle structural support member 146-4; the lower end of the middle structural support member 146-4 is joined to the left end of the bottom structural support member 148-2; the right end of the bottom structural support member 148-2 is joined to the lower end of the middle structural support member 146-3; and the upper end of the middle structural support member 146-3 is joined to the right end of the top structural support member 144-2. In the structural support frame 140, the ends of the structural support members, which are joined together, are directly connected, all around the periphery of their walls. However, in various alternative embodiments, any of the structural support members 144-1, 144-2, 146-1, 146-2, 146-3, 146-4, 148-1, and 148-2 can be joined together in any way described herein or known in the art.

In alternative embodiments of the structural support frame 140, adjacent structural support members can be combined into a single structural support member, wherein the combined structural support member can effectively substitute for the adjacent structural support members, as their functions and connections are described herein. In other alternative embodiments of the structural support frame 140, one or more additional structural support members can be added to the structural support members in the structural support frame 140, wherein the expanded structural support frame can effectively substitute for the structural support frame 140, as its functions and connections are described herein. Also, in some alternative embodiments, a flexible container may not include a base structure.

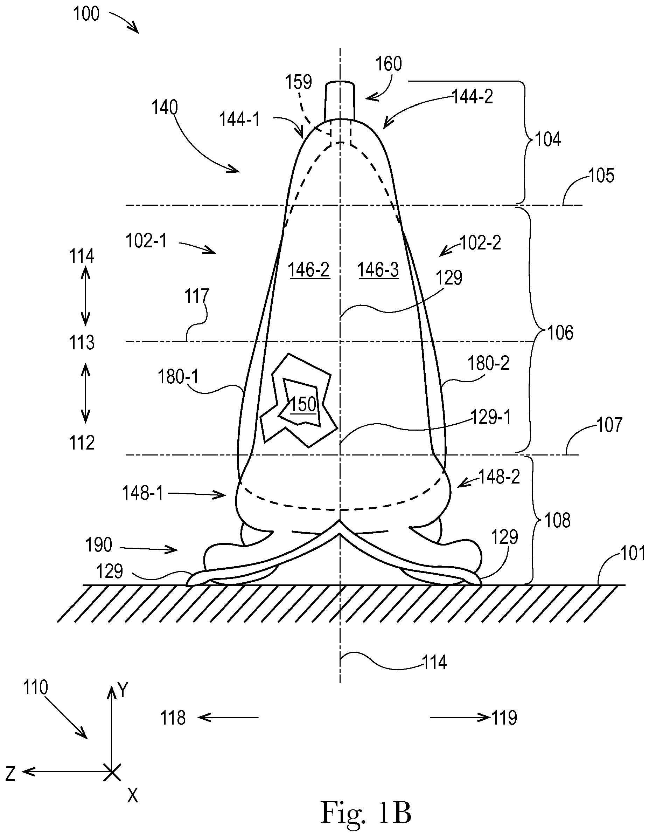

Figure 1B illustrates a side view of the stand up flexible container 100 of Figure 1A.

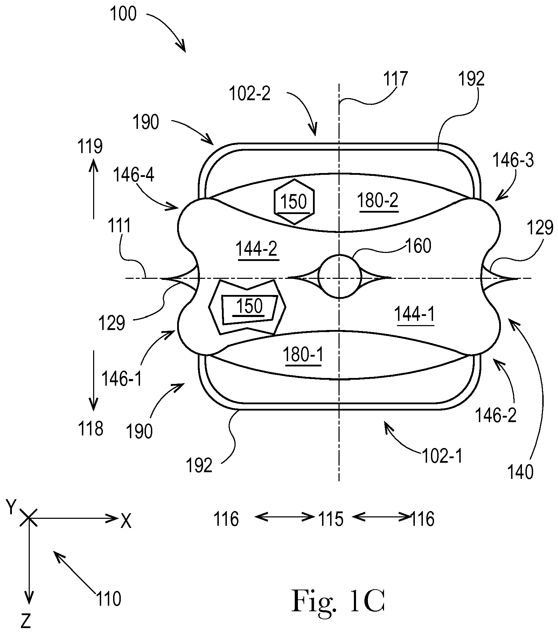

Figure 1C illustrates a top view of the stand up flexible container 100 of Figure 1A.

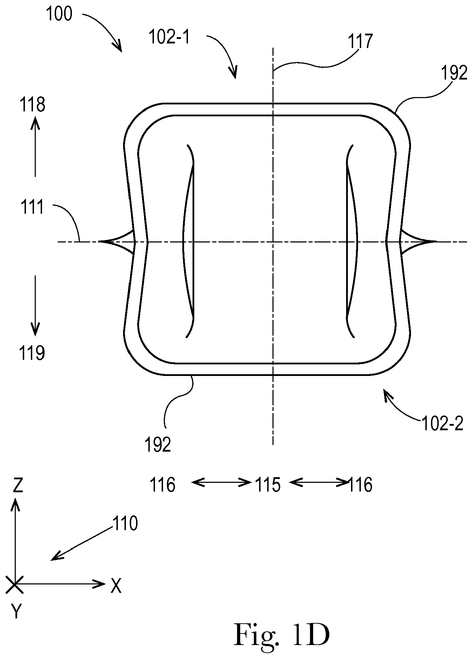

Figure 1D illustrates a bottom view of the stand up flexible container 100 of Figure 1A.

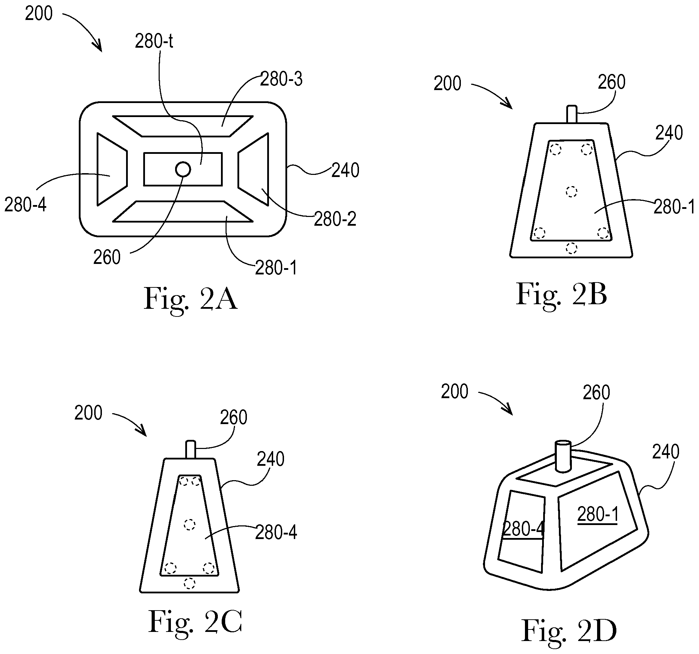

Figures 2A-8D illustrate embodiments of stand up flexible containers having various overall shapes. Any of the embodiments of Figures 2A-8D can be configured according to any of the embodiments disclosed herein, including the embodiments of Figures 1A-1D. Any of the elements (e.g. structural support frames, structural support members, panels, dispensers, etc.) of the embodiments of Figures 2A-8D, can be configured according to any of the embodiments disclosed herein. While each of the embodiments of Figures 2A-8D illustrates a container with one dispenser, in various embodiments, each container can include multiple dispensers, according to any embodiment described herein. Figures 2A-8D illustrate exemplary additional/alternate locations for dispenser with phantom line outlines. Part, parts, or about all, or approximately all, or substantially all, or nearly all, or all of each of the panels in the embodiments of Figures 2A-8D is suitable to display any kind of indicia. Each of the side panels in the embodiments of Figures 2A-8D is configured to be a nonstructural panel, overlaying product volumes disposed within the flexible container, however, in various embodiments, one or more of any kind of decorative or structural element (such as a rib, protruding from an outer surface) can be joined to part, parts, or about all, or approximately all, or substantially all, or nearly all, or all of any of these side panels. For clarity, not all structural details of these flexible containers are shown in Figures 2A-8D, however any of the embodiments of Figures 2A-8D can be configured to include any structure or feature for flexible containers, disclosed herein. For example, any of the embodiments of Figures 2A-8D can be configured to include any kind of base structure disclosed herein.

Figure 2A illustrates a front view of a stand up flexible container 200 having a structural support frame 240 that has an overall shape like a frustum. In the embodiment of Figure 2A, the frustum shape is based on a four-sided pyramid, however, in various embodiments, the frustum shape can be based on a pyramid with a different number of sides, or the frustum shape can be based on a cone. The support frame 240 is formed by structural support members disposed along the edges of the frustum shape and joined together at their ends. The structural support members define a rectangular shaped top panel 280-t, trapezoidal shaped side panels 280-1, 280-2, 280-3, and 280-4, and a rectangular shaped bottom panel (not shown). Each of the side panels 280-1, 280-2, 280-3, and 280-4 is about flat, however in various embodiments, part, parts, or about all, or approximately all, or substantially all, or nearly all, or all of any of the side panels can be approximately flat, substantially flat, nearly flat, or completely flat. The container 200 includes a dispenser 260, which is configured to dispense one or more fluent products from one or more product volumes disposed within the container 200. In the embodiment of Figure 2A, the dispenser 260 is disposed in the center of the top panel 280-t, however, in various alternate embodiments, the dispenser 260 can be disposed anywhere else on the top, sides, or bottom, of the container 200, according to any embodiment described or illustrated herein. Figure 2B illustrates a front view of the container 200 of Figure 2A, including exemplary additional/alternate locations for a dispenser, any of which can also apply to the back of the container. Figure 2C illustrates a side view of the container 200 of Figure 2A, including exemplary additional/alternate locations for a dispenser (shown as phantom lines), any of which can apply to either side of the container. Figure 2D illustrates an isometric view of the container 200 of Figure 2A.

Figure 3A illustrates a front view of a stand up flexible container 300 having a structural support frame 340 that has an overall shape like a pyramid. In the embodiment of Figure 3A, the pyramid shape is based on a four-sided pyramid, however, in various embodiments, the pyramid shape can be based on a pyramid with a different number of sides. The support frame 340 is formed by structural support members disposed along the edges of the pyramid shape and joined together at their ends. The structural support members define triangular shaped side panels 380-1, 380-2, 380-3, and 380-4, and a square shaped bottom panel (not shown). Each of the side panels 380-1, 380-2, 380-3, and 380-4 is about flat, however in various embodiments, part, parts, or about all, or approximately all, or substantially all, or nearly all, or all of any of the side panels can be approximately flat, substantially flat, nearly flat, or completely flat. The container 300 includes a dispenser 360, which is configured to dispense one or more fluent products from one or more product volumes disposed within the container 300. In the embodiment of Figure 3A, the dispenser 360 is disposed at the apex of the pyramid shape, however, in various alternate embodiments, the dispenser 360 can be disposed anywhere else on the top, sides, or bottom, of the container 300. Figure 3B illustrates a front view of the container 300 of Figure 3A, including exemplary additional/alternate locations for a dispenser (shown as phantom lines), any of which can also apply to any side of the container. Figure 3C illustrates a side view of the container 300 of Figure 3A. Figure 3D illustrates an isometric view of the container 300 of Figure 3A.

Figure 4A illustrates a front view of a stand up flexible container 400 having a structural support frame 440 that has an overall shape like a trigonal prism. In the embodiment of Figure 4A, the prism shape is based on a triangle. The support frame 440 is formed by structural support members disposed along the edges of the prism shape and joined together at their ends. The structural support members define a triangular shaped top panel 480-t, rectangular shaped side panels 480-1, 480-2, and 480-3, and a triangular shaped bottom panel (not shown). Each of the side panels 480-1, 480-2, and 480-3 is about flat, however in various embodiments, part, parts, or about all, or approximately all, or substantially all, or nearly all, or all of the side panels can be approximately flat, substantially flat, nearly flat, or completely flat. The container 400 includes a dispenser 460, which is configured to dispense one or more fluent products from one or more product volumes disposed within the container 400. In the embodiment of Figure 4A, the dispenser 460 is disposed in the center of the top panel 480-t, however, in various alternate embodiments, the dispenser 460 can be disposed anywhere else on the top, sides, or bottom, of the container 400. Figure 4B illustrates a front view of the container 400 of Figure 4A, including exemplary additional/alternate locations for a dispenser (shown as phantom lines), any of which can also apply to any side of the container 400. Figure 4C illustrates a side view of the container 400 of Figure 4A. Figure 4D illustrates an isometric view of the container 400 of Figure 4A.

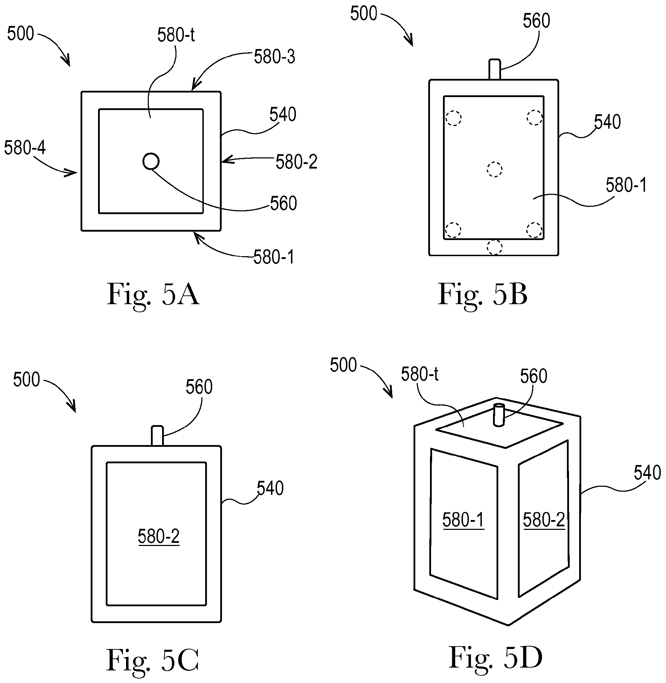

Figure 5A illustrates a front view of a stand up flexible container 500 having a structural support frame 540 that has an overall shape like a tetragonal prism. In the embodiment of Figure 5A, the prism shape is based on a square. The support frame 540 is formed by structural support members disposed along the edges of the prism shape and joined together at their ends. The structural support members define a square shaped top panel 580-t, rectangular shaped side panels 580-1, 580-2, 580-3, and 580-4, and a square shaped bottom panel (not shown). Each of the side panels 580-1, 580-2, 580-3, and 580-4 is about flat, however in various embodiments, part, parts, or about all, or approximately all, or substantially all, or nearly all, or all of any of the side panels can be approximately flat, substantially flat, nearly flat, or completely flat. The container 500 includes a dispenser 560, which is configured to dispense one or more fluent products from one or more product volumes disposed within the container 500. In the embodiment of Figure 5A, the dispenser 560 is disposed in the center of the top panel 580-t, however, in various alternate embodiments, the dispenser 560 can be disposed anywhere else on the top, sides, or bottom, of the container 500. Figure 5B illustrates a front view of the container 500 of Figure 5A, including exemplary additional/alternate locations for a dispenser (shown as phantom lines), any of which can also apply to any side of the container 500. Figure 5C illustrates a side view of the container 500 of Figure 5A. Figure 5D illustrates an isometric view of the container 500 of Figure 5A.

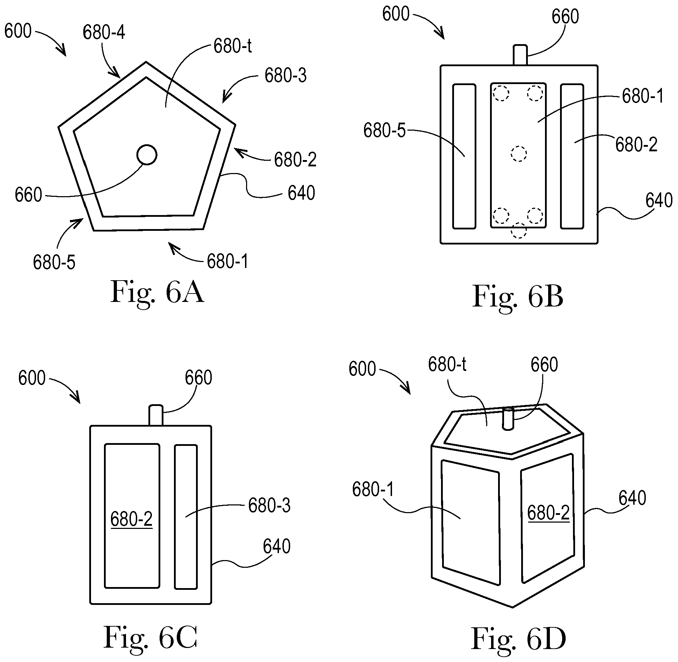

Figure 6A illustrates a front view of a stand up flexible container 600 having a structural support frame 640 that has an overall shape like a pentagonal prism. In the embodiment of Figure 6A, the prism shape is based on a pentagon. The support frame 640 is formed by structural support members disposed along the edges of the prism shape and joined together at their ends. The structural support members define a pentagon shaped top panel 680-t, rectangular shaped side panels 680-1, 680-2, 680-3, 680-4, and 680-5, and a pentagon shaped bottom panel (not shown). Each of the side panels 680-1, 680-2, 680-3, 680-4, and 680-5 is about flat, however in various embodiments, part, parts, or about all, or approximately all, or substantially all, or nearly all, or all of any of the side panels can be approximately flat, substantially flat, nearly flat, or completely flat. The container 600 includes a dispenser 660, which is configured to dispense one or more fluent products from one or more product volumes disposed within the container 600. In the embodiment of Figure 6A, the dispenser 660 is disposed in the center of the top panel 680-t, however, in various alternate embodiments, the dispenser 660 can be disposed anywhere else on the top, sides, or bottom, of the container 600. Figure 6B illustrates a front view of the container 600 of Figure 6A, including exemplary additional/alternate locations for a dispenser (shown as phantom lines), any of which can also apply to any side of the container 600. Figure 6C illustrates a side view of the container 600 of Figure 6A. Figure 6D illustrates an isometric view of the container 600 of Figure 6A.

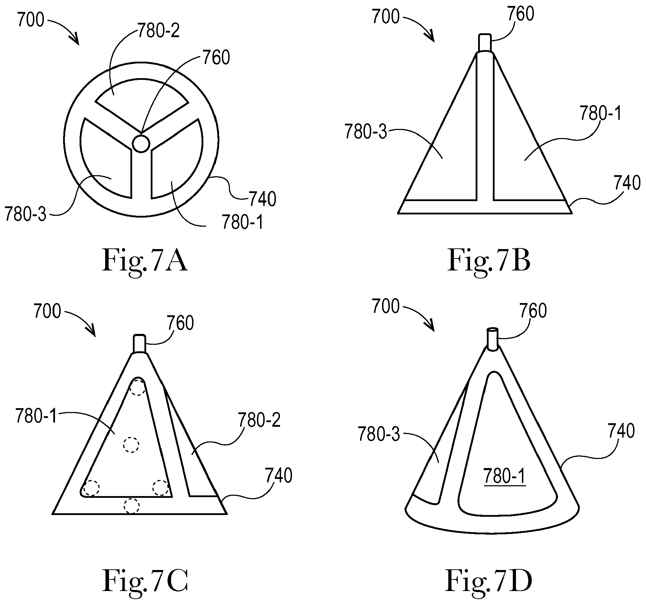

Figure 7A illustrates a front view of a stand up flexible container 700 having a structural support frame 740 that has an overall shape like a cone. The support frame 740 is formed by curved structural support members disposed around the base of the cone and by straight structural support members extending linearly from the base to the apex, wherein the structural support members are joined together at their ends. The structural support members define curved somewhat triangular shaped side panels 780-1, 780-2, and 780-3, and a circular shaped bottom panel (not shown). Each of the side panels 780-1, 780-2, and 780-3, is curved, however in various embodiments, part, parts, or about all, or approximately all, or substantially all, or nearly all, or all of any of the side panels can be approximately flat, substantially flat, nearly flat, or completely flat. The container 700 includes a dispenser 760, which is configured to dispense one or more fluent products from one or more product volumes disposed within the container 700. In the embodiment of Figure 7A, the dispenser 760 is disposed at the apex of the conical shape, however, in various alternate embodiments, the dispenser 760 can be disposed anywhere else on the top, sides, or bottom, of the container 700. Figure 7B illustrates a front view of the container 700 of Figure 7A. Figure 7C illustrates a side view of the container 700 of Figure 7A, including exemplary additional/alternate locations for a dispenser (shown as phantom lines), any of which can also apply to any side panel of the container 700. Figure 7D illustrates an isometric view of the container 700 of Figure 7A.

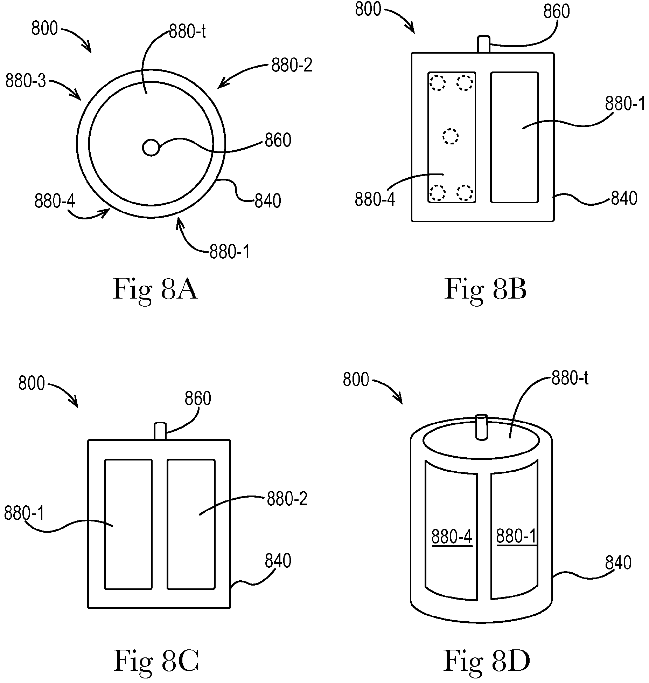

Figure 8A illustrates a front view of a stand up flexible container 800 having a structural support frame 840 that has an overall shape like a cylinder. The support frame 840 is formed by curved structural support members disposed around the top and bottom of the cylinder and by straight structural support members extending linearly from the top to the bottom, wherein the structural support members are joined together at their ends. The structural support members define a circular shaped top panel 880-t, curved somewhat rectangular shaped side panels 880-1, 880-2, 880-3, and 880-4, and a circular shaped bottom panel (not shown). Each of the side panels 880-1, 880-2, 880-3, and 880-4, is curved, however in various embodiments, part, parts, or about all, or approximately all, or substantially all, or nearly all, or all of any of the side panels can be approximately flat, substantially flat, nearly flat, or completely flat. The container 800 includes a dispenser 860, which is configured to dispense one or more fluent products from one or more product volumes disposed within the container 800. In the embodiment of Figure 8A, the dispenser 860 is disposed in the center of the top panel 880-t, however, in various alternate embodiments, the dispenser 860 can be disposed anywhere else on the top, sides, or bottom, of the container 800. Figure 8B illustrates a front view of the container 800 of Figure 8A, including exemplary additional/alternate locations for a dispenser (shown as phantom lines), any of which can also apply to any side panel of the container 800. Figure 8C illustrates a side view of the container 800 of Figure 8A. Figure 8D illustrates an isometric view of the container 800 of Figure 8A.

In additional embodiments, any stand up flexible container with a structural support frame, as disclosed herein, can be configured to have an overall shape that corresponds with any other known three-dimensional shape, including any kind of polyhedron, any kind of prismatoid, and any kind of prism (including right prisms and uniform prisms).

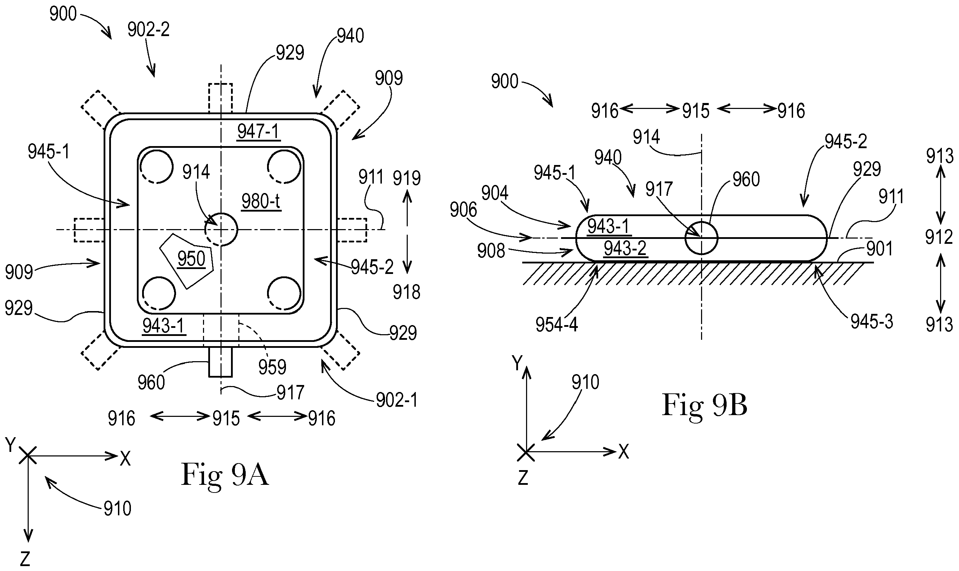

Figure 9A illustrates a top view of an embodiment of a self-supporting flexible container 900, having an overall shape like a square, the embodiment not forming part of the claimed invention, but representing background art useful for understanding the invention. Figure 9B illustrates an end view of the flexible container 900 of Figure 9A. The container 900 is resting on a horizontal support surface 901.

In Figure 9B, a coordinate system 910, provides lines of reference for referring to directions in the figure. The coordinate system 910 is a three-dimensional Cartesian coordinate system, with an X-axis, a Y-axis, and a Z-axis. The X-axis and the Z-axis are parallel with the horizontal support surface 901 and the Y-axis is perpendicular to the horizontal support surface 901.

Figure 9A also includes other lines of reference, for referring to directions and locations with respect to the container 100. A lateral centerline 911 runs parallel to the X-axis. An XY plane at the lateral centerline 911 separates the container 100 into a front half and a back half. An XZ plane at the lateral centerline 911 separates the container 100 into an upper half and a lower half. A longitudinal centerline 914 runs parallel to the Y-axis. A YZ plane at the longitudinal centerline 914 separates the container 900 into a left half and a right half. A third centerline 917 runs parallel to the Z-axis. The lateral centerline 911, the longitudinal centerline 914, and the third centerline 917 all intersect at a center of the container 900. These terms for direction, orientation, measurement, and disposition, in the embodiment of Figures 9A-9B are the same as the like-numbered terms in the embodiment of Figures 1A-1D.

The container 900 includes a top 904, a middle 906, and a bottom 908, the front 902-1, the back 902-2, and left and right sides 909. In the embodiment of Figures 9A-9B, the upper half and the lower half of the container are joined together at a seal 929, which extends around the outer periphery of the container 900. The bottom of the container 900 is configured in the same way as the top of the container 900.

The container 900 includes a structural support frame 940, a product volume 950, a dispenser 960, a top panel 980-t and a bottom panel (not shown). A portion of the top panel 980-t is illustrated as broken away, in order to show the product volume 950. The product volume 950 is configured to contain one or more fluent products. The dispenser 960 allows the container 900 to dispense these fluent product(s) from the product volume 950 through a flow channel 959 then through the dispenser 960, to the environment outside of the container 900. The structural support frame 940 supports the mass of fluent product(s) in the product volume 950. The top panel 980-t and the bottom panel are relatively flat surfaces, overlaying the product volume 950, and are suitable for displaying any kind of indicia.

The structural support frame 940 is formed by a plurality of structural support members. The structural support frame 940 includes front structural support members 943-1 and 943-2, intermediate structural support members 945-1, 945-2, 945-3, and 945-4, as well as back structural support members 947-1 and 947-2. Overall, each of the structural support members in the container 900 is oriented horizontally. And, each of the structural support members in the container 900 has a cross-sectional area that is substantially uniform along its length, although in various embodiments, this cross-sectional area can vary.

Upper structural support members 943-1, 945-1, 945-2, and 947-1 are disposed in an upper part of the middle 906 and in the top 904, while lower structural support members 943-2, 945-4, 945-3, and 947-2 are disposed in a lower part of the middle 906 and in the bottom 908. The upper structural support members 943-1, 945-1, 945-2, and 947-1 are disposed above and adjacent to the lower structural support members 943-2, 945-4, 945-3, and 947-2, respectively.

In various embodiments, adjacent upper and lower structural support members can be in contact with each other at one or more relatively smaller locations and/or at one or more relatively larger locations, along part, or parts, or about all, or approximately all, or substantially all, or nearly all, or all of their overall lengths, so long as there is a gap in the contact for the flow channel 959, between the structural support members 943-1 and 943-2. In the embodiment of Figures 9A-9B, the upper and lower structural support members are not directly connected to each other. However, in various alternate embodiments, adjacent upper and lower structural support members can be directly connected and/or joined together along part, or parts, or about all, or approximately all, or substantially all, or nearly all, or all of their overall lengths.

The ends of structural support members 943-1, 945-2, 947-1, and 945-1 are joined together to form a top square that is outward from and surrounding the product volume 950, and the ends of structural support members 943-2, 945-3, 947-2, and 945-4 are also joined together to form a bottom square that is outward from and surrounding the product volume 950. In the structural support frame 940, the ends of the structural support members, which are joined together, are directly connected, all around the periphery of their walls. However, in various alternative embodiments, any of the structural support members of the embodiment of Figures 9A-9B can be joined together in any way described herein or known in the art.

In alternative embodiments of the structural support frame 940, adjacent structural support members can be combined into a single structural support member, wherein the combined structural support member can effectively substitute for the adjacent structural support members, as their functions and connections are described herein. In other alternative embodiments of the structural support frame 940, one or more additional structural support members can be added to the structural support members in the structural support frame 940, wherein the expanded structural support frame can effectively substitute for the structural support frame 940, as its functions and connections are described herein.

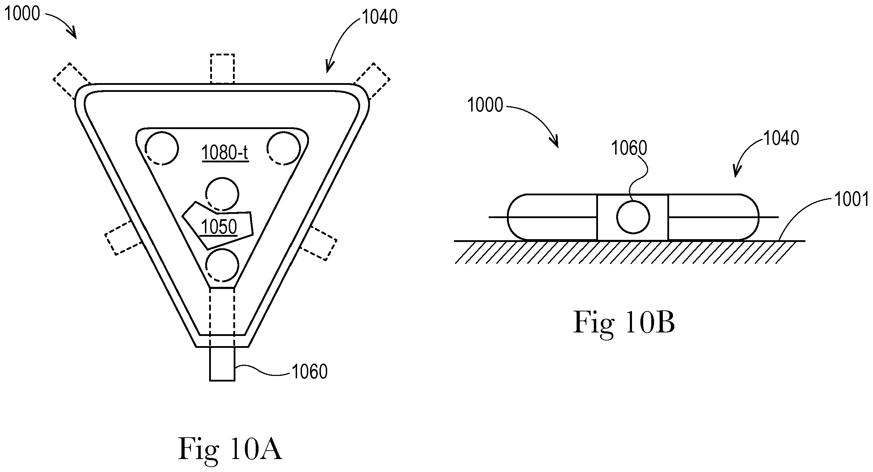

Figures 10A-11B illustrate embodiments of self-supporting flexible containers (that are not stand up containers) having various overall shapes. Any of the embodiments of Figures 10A-11B can be configured according to any of the embodiments disclosed herein, including the embodiments of Figures 9A-9B. Any of the elements (e.g. structural support frames, structural support members, panels, dispensers, etc.) of the embodiments of Figures 10A-11B, can be configured according to any of the embodiments disclosed herein. While each of the embodiments of Figures 10A-11B illustrates a container with one dispenser, in various embodiments, each container can include multiple dispensers, according to any embodiment described herein. Part, parts, or about all, or approximately all, or substantially all, or nearly all, or all of each of the panels in the embodiments of Figures 10A-11B is suitable to display any kind of indicia. Each of the top and bottom panels in the embodiments of Figures 10A-11B is configured to be a nonstructural panel, overlaying product volume(s) disposed within the flexible container, however, in various embodiments, one or more of any kind of decorative or structural element (such as a rib, protruding from an outer surface) can be joined to part, parts, or about all, or approximately all, or substantially all, or nearly all, or all of any of these panels. For clarity, not all structural details of these flexible containers are shown in Figures 10A-11B, however any of the embodiments of Figures 10A-11B can be configured to include any structure or feature for flexible containers, disclosed herein.

Figure 10A illustrates a top view of an embodiment of a self-supporting flexible container 1000 (that is not a stand up flexible container) having a product volume 1050 and an overall shape like a triangle. However, in various embodiments, a self-supporting flexible container can have an overall shape like a polygon having any number of sides. The support frame 1040 is formed by structural support members disposed along the edges of the triangular shape and joined together at their ends. The structural support members define a triangular shaped top panel 1080-t, and a triangular shaped bottom panel (not shown). The top panel 1080-t and the bottom panel are about flat, however in various embodiments, part, parts, or about all, or approximately all, or substantially all, or nearly all, or all of any of the side panels can be approximately flat, substantially flat, nearly flat, or completely flat. The container 1000 includes a dispenser 1060, which is configured to dispense one or more fluent products from one or more product volumes disposed within the container 1000. In the embodiment of Figure 10A, the dispenser 1060 is disposed in the center of the front, however, in various alternate embodiments, the dispenser 1060 can be disposed anywhere else on the top, sides, or bottom, of the container 1000. Figure 10A includes exemplary additional/alternate locations for a dispenser (shown as phantom lines). Figure 10B illustrates an end view of the flexible container 1000 of Figure 10B, resting on a horizontal support surface 1001.

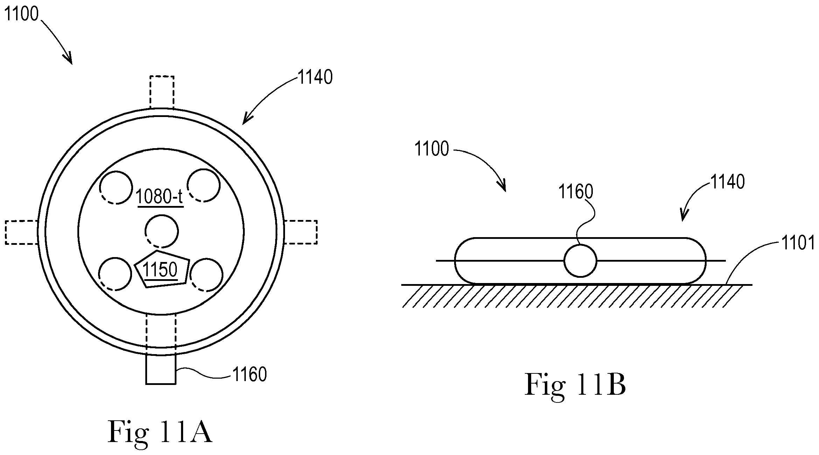

Figure 11A illustrates a top view of an embodiment of a self-supporting flexible container 1100 (that is not a stand up flexible container) having a product volume 1150 and an overall shape like a circle. The support frame 1140 is formed by structural support members disposed around the circumference of the circular shape and joined together at their ends. The structural support members define a circular shaped top panel 1180-t, and a circular shaped bottom panel (not shown). The top panel 1180-t and the bottom panel are about flat, however in various embodiments, part, parts, or about all, or approximately all, or substantially all, or nearly all, or all of any of the side panels can be approximately flat, substantially flat, nearly flat, or completely flat. The container 1100 includes a dispenser 1160, which is configured to dispense one or more fluent products from one or more product volumes disposed within the container 1100. In the embodiment of Figure 11A, the dispenser 1160 is disposed in the center of the front, however, in various alternate embodiments, the dispenser 1160 can be disposed anywhere else on the top, sides, or bottom, of the container 1100. Figure 11A includes exemplary additional/alternate locations for a dispenser (shown as phantom lines). Figure 11B illustrates an end view of the flexible container 1100 of Figure 10B, resting on a horizontal support surface 1101.

In additional embodiments, any self-supporting container with a structural support frame, as disclosed herein, can be configured to have an overall shape that corresponds with any other known three-dimensional shape. For example, any self-supporting container with a structural support frame, as disclosed herein, can be configured to have an overall shape (when observed from a top view) that corresponds with a rectangle, a polygon (having any number of sides), an oval, an ellipse, a star, or any other shape, or combinations of any of these.

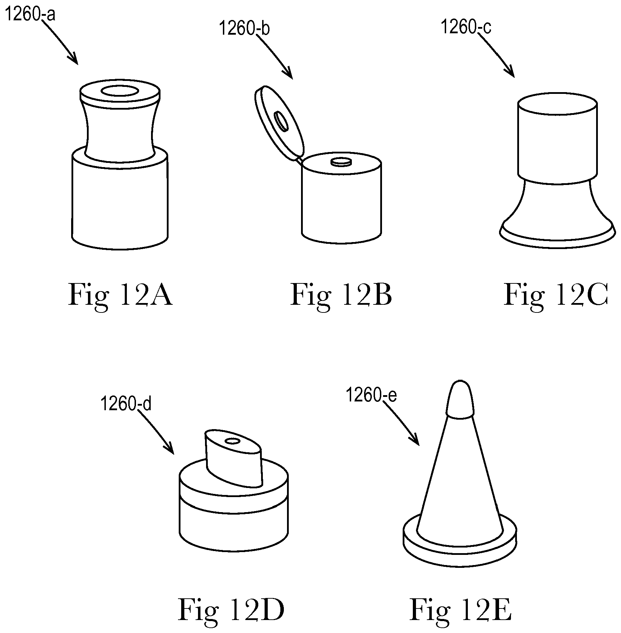

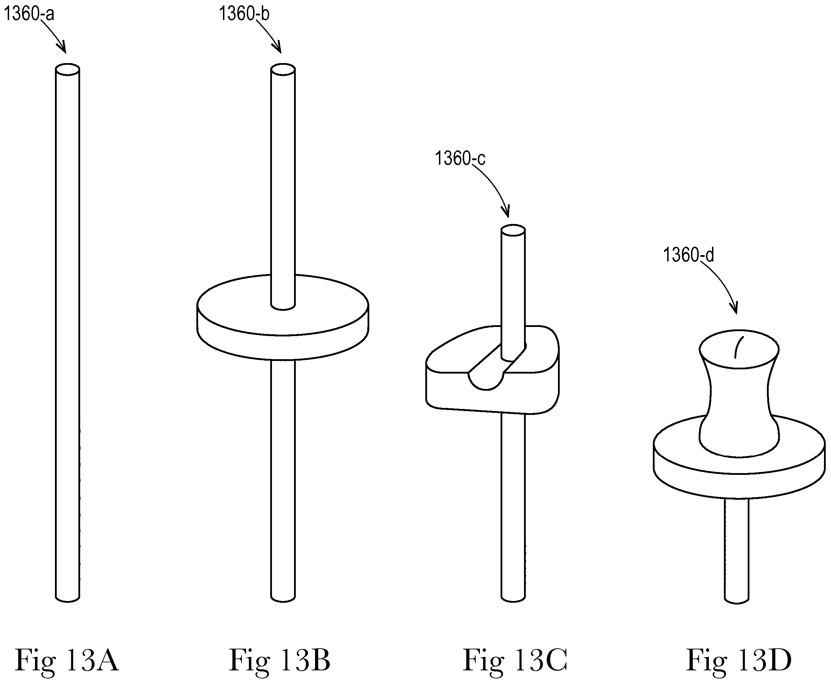

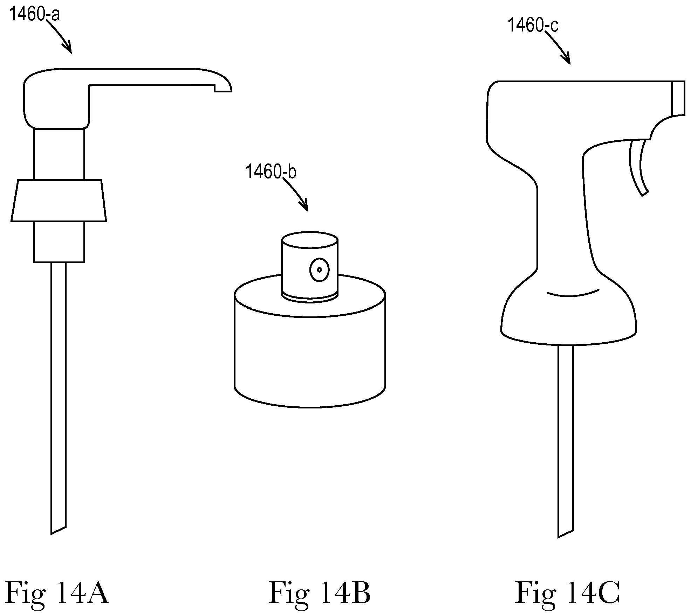

Figures 12A-14C illustrate various exemplary dispensers, which can be used with the flexible containers disclosed herein. Figure 12A illustrates an isometric view of push-pull type dispenser 1260-a. Figure 12B illustrates an isometric view of dispenser with a flip-top cap 1260-b. Figure 12C illustrates an isometric view of dispenser with a screw-on cap 1260-c. Figure 12D illustrates an isometric view of rotatable type dispenser 1260-d. Figure 12E illustrates an isometric view of nozzle type dispenser with a cap 1260-d. Figure 13A illustrates an isometric view of straw dispenser 1360-a. Figure 13B illustrates an isometric view of straw dispenser with a lid 1360-b. Figure 13C illustrates an isometric view of flip up straw dispenser 1360-c. Figure 13D illustrates an isometric view of straw dispenser with bite valve 1360-d. Figure 14A illustrates an isometric view of pump type dispenser 1460-a, which can, in various embodiments be a foaming pump type dispenser. Figure 14B illustrates an isometric view of pump spray type dispenser 1460-b. Figure 14C illustrates an isometric view of trigger spray type dispenser 1460-c.

Embodiments of the present disclosure, including embodiments representing background art, can be configured to include multiple product volumes.

In a first set of embodiments, an article of manufacture can be configured to include a first disposable self-supporting flexible container having a first structural support frame and a first product volume, wherein the first structural frame is configured to support the first product volume; and a second disposable flexible container having a second product volume (and which may or may not have a structural support frame); wherein the first container is joined to the second container. In this first set of embodiments, neither, either or both of these flexible containers can be configured to be stand up containers. In variations of this first set of embodiments, any of these articles can be configured to include any number of product volumes, any of which can be joined together, in any manner disclosed herein. Any part, parts, or all of any embodiment in this first set of embodiments can be configured according to any embodiment of the present disclosure, in any workable combination.

In a second set of embodiments, a non-durable self-supporting flexible container can be configured to include a first product volume; a second product volume; and a structural support frame, configured to support both the first product volume and the second product volume. In this second set of embodiments, any of these flexible containers can be configured to be stand up containers. In variations of this second set of embodiments, any of these articles can be configured to include any number of product volumes, each supported by the structural support frame, in any manner disclosed herein. Any part, parts, or all of any embodiment in this second set of embodiments can be configured according to any embodiment of the present disclosure, in any workable combination.

In a third set of embodiments, a disposable self-supporting flexible container can be configured to include a first product volume, which directly contains a first fluent product; a second product volume, which directly contains a second fluent product that differs from the first fluent product; and a structural support frame, configured to support either or both of the product volumes. In this second set of embodiments, any of these flexible containers can be configured to be stand up containers. In variations of this third set of embodiments, any of these flexible containers can be configured to include any number of product volumes, each with a different fluent product, in any manner disclosed herein. Any part, parts, or all of any embodiment in this third set of embodiments can be configured according to any embodiment of the present disclosure, in any workable combination.

In a fourth set of embodiments, a non-durable self-supporting flexible container can be configured to include: a first product volume, which directly contains a first fluent product; a second product volume, which directly contains a second fluent product that differs from the first fluent product; and a structural support frame, configured to support both the first product volume and the second product volume; and only one dispenser. In this fourth set of embodiments, any of these flexible containers can be configured to be stand up containers. In variations of this fourth set of embodiments, any of these flexible containers can be configured to include any number of product volumes, each with a different fluent product, in any manner disclosed herein. Any part, parts, or all of any embodiment in this fourth set of embodiments can be configured according to any embodiment of the present disclosure, in any workable combination.

In embodiments with multiple product volumes, any of the product volumes and any of the mixing volumes can have any size disclosed herein. Various embodiments of an article of manufacture and/or a flexible container (self-supporting only or stand up), can be configured with one or more product volumes and/or one or more mixing volumes that are single dose volumes and/or one or more product volumes and/or one or more mixing volumes that are multiple dose volumes. Various embodiments of an article of manufacture and/or a flexible container (self-supporting only or stand up), can be configured with one or more product volumes that are sized in relationship to each other, for example, in relation to their expected use (independently and/or in combination).

As a particular example, a flexible container can include one or more smaller product volumes containing one or more fluent products that are additives (configured to be combined with a base composition), as well as one or more larger product volumes and/or mixing volumes, which contain a fluent product that is the base composition, wherein the fluent products from the smaller product volumes can be selectively added to the base composition by an end user (e.g. by opening a flow channel or by breaking open a frangible seal).

In embodiments with multiple product volumes, for product volumes that are disposed proximate to each other and/or adjacent to each other and/or in contact with each other, their fluent products can be kept separate by the material(s) that define their spaces and/or by one or more rigid materials and/or one or more flexible materials (such as those disclosed herein), which can also act as a barrier between the product volumes. In any embodiment of article and/or flexible container (self-supporting only or stand up) disclosed herein, a wall that separates product volumes can be configured as a frangible wall, which can be broken open through application of outside forces (e.g. by an end user squeezing and/or compressing the outside portions of the container that are proximate to the frangible wall), to allow fluent products from those (previously separated) product volumes to mix together.

In embodiments with multiple product volumes, any of the product volumes and any of the mixing volumes can be configured to include one or more of any fluent product disclosed herein. Various embodiments of an article of manufacture and/or a flexible container (self-supporting only or stand up), can be configured with multiple product volumes wherein each product volume contains a different fluent product. Following, are examples of a first and second fluent products, which can be provided (respectively) in first and second product volumes of a flexible container.

As a first example, a first fluent product can be a composition essentially made from a defined group of ingredients combined in a first apportionment, and a second fluent product can be a composition essentially made from the same defined group of ingredients combined in a second apportionment, which differs from the first apportionment.

As a second example, a first fluent product can be a composition essentially made from a defined group of active ingredients and a first additive, and a second fluent product can be a composition essentially made from the same defined group of active ingredients and a second additive, which differs from the first additive.

As a third example, a first fluent product can be a first additive (configured to be combined with a base composition) and a second fluent product can be a second additive (also configured to be combined with the same base composition), which differs from the first additive. In various embodiments, these first and second additives can be distinguishing additives, which create compositions that are distinctly different from each other when they are combined with the base compositions. Distinguishing additives can create base compositions with distinctly different appearances, fragrances, flavors, etc.

As a fourth example, a first fluent product can be a base composition and a second fluent product can be an additive configured to be combined with the base composition.

As a fifth example, a first fluent product and a second fluent product can be co-reactive with each other.

Following are other various embodiments for first and second fluent products. A first fluent product and a second fluent product can each be a grooming composition, such as a depilatory and an aftershave. A first fluent product and a second fluent product can each be a beauty care composition, such as a shampoo and a conditioner. A first fluent product and a second fluent product can each be a personal care composition, such as a deodorant and an antiperspirant. A first fluent product and a second fluent product can each be a personal care composition, such as a deodorant and an antiperspirant. A first fluent product and a second fluent product can each be a cosmetics composition, such as a compositions used in different steps of a multi-step application process. A first fluent product and a second fluent product can each be a fabric care composition, such as a detergent and a fabric softener. A first fluent product and a second fluent product can each be an oral care composition, such as a toothpaste and a mouthwash. A first fluent product and a second fluent product can each be a dish care composition, such as a dish soap and rinse aid. A first fluent product and a second fluent product can each be a medicament or a pharmaceutical, such as a pharmaceutical intended for daytime use, and a pharmaceutical intended for nighttime use. A first fluent product and a second fluent product can each be different fragrances, different foods, different beverages, etc.

In embodiments with multiple product volumes, any of the product volumes and any of the mixing volumes can be configured with any number of any kind of dispenser configured in any manner disclosed herein. Various embodiments of an article of manufacture and/or a flexible container (self-supporting only or stand up), can be configured with one or more product volumes and/or one or more mixing volumes, wherein such a volume includes only one, or more than one dispenser. Various embodiments of an article of manufacture and/or a flexible container (self-supporting only or stand up), can be configured, wherein the article and/or the container includes only one, or more than one dispenser. In various embodiments of an article of manufacture and/or a flexible container (self-supporting only or stand up), different product volumes can have dispensers having different flow rates. For example, different product volumes can have dispensers with flow rates that are sized for the different fluent products in those product volumes, with differences based on various factors such as product viscosity, size of dose, or expected rate of use (independently and/or in combination).

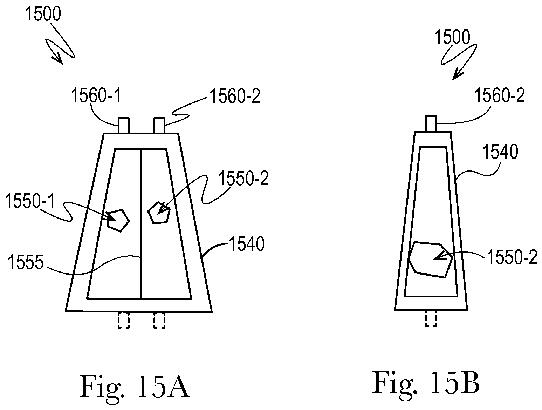

Figures 15A-39B illustrate embodiments of stand up flexible containers, which are configured with structural support frames and multiple product volumes. Figures 15A-39B illustrate embodiments of stand up flexible containers having structural support frames that each have an overall shape like a frustum, such as in the embodiment of Figures 2A-2D. Alternatively, any of the embodiments of Figures 15A-39B can have a structural support frame that has an overall shape configured according to any of the embodiments disclosed herein, including the embodiments of Figures 3A-8D, and any of their alternate embodiments. Any of the elements (e.g. structural support frames, structural support members, panels, dispensers, etc.) of the embodiments of Figures 15A-39B, can be configured according to any of the embodiments disclosed herein. While each of the embodiments of Figures 15A-39B illustrates a container with a particular number of product volumes and dispensers, in various embodiments, each container can include various numbers of product volumes and various numbers of dispensers, each configured according to any embodiment described herein. The embodiments of Figures 15A-39B include nonstructural panels, disposed between the structural support members that form their structural support frames (as described herein), and part, parts, or about all, or approximately all, or substantially all, or nearly all, or all of each of the panels in the embodiments of Figures 15A-39B is suitable to display any kind of indicia, and to be configured in any way described herein. Throughout figures 15A-39B, portions of panels are illustrated as broken away, in order to show product volumes. For clarity, not all structural details of these flexible containers are shown in Figures 15A-39B, however any of the embodiments of Figures 15A-39B can be configured to include any structure or feature for flexible containers, disclosed herein. For example, any of the embodiments of Figures 15A-39B can be configured to include any kind of base structure disclosed herein.

Figure 15A illustrates a front view of an embodiment of a stand up flexible container 1500 having a structural support frame 1540 and two product volumes 1550-1 and 1550-2 disposed side by side, separated by a vertical wall 1555, with dispensers 1560-1 and 1560-2 on the top (or alternatively, on the bottom) of the container 1500. The dispenser 1560-1 is in fluid communication with the product volume 1550-1 and the dispenser 1560-2 is in fluid communication with the product volume 1550-2. Figure 15B illustrates a side view of the stand up flexible container 1500 of Figure 15A.

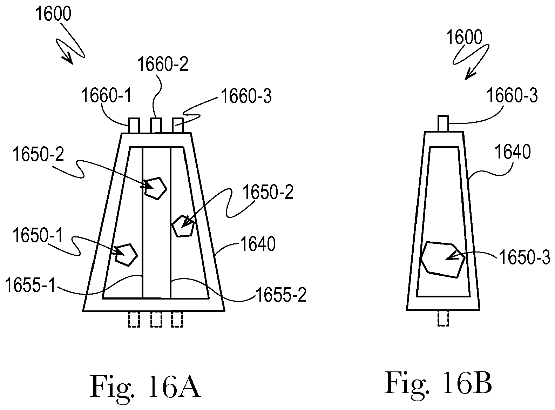

Figure 16A illustrates a front view of an embodiment of a stand up flexible container 1600 having a structural support frame 1640 and three product volumes 1650-1, 1650-2, and 1650-3 disposed side by side, separated by vertical walls 1655-1 and 1655-2, with dispensers 1660-1, 1660-2, and 1660-3 on the top (or alternatively, on the bottom) of the container 1600. The dispenser 1660-1 is in fluid communication with the product volume 1650-1, the dispenser 1660-2 is in fluid communication with the product volume 1650-2, and the dispenser 1660-3 is in fluid communication with the product volume 1650-3. Figure 16B illustrates a side view of the stand up flexible container 1600 of Figure 16A.

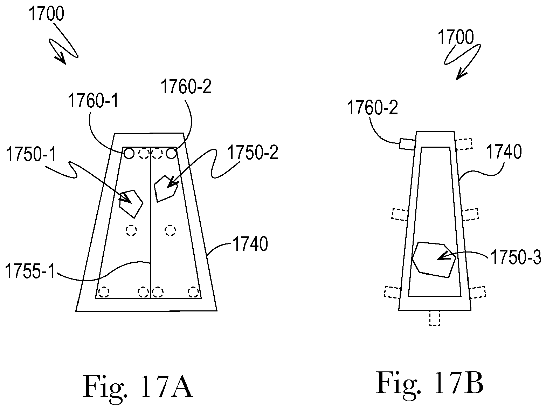

Figure 17A illustrates a front view of an embodiment of a stand up flexible container 1700 having a structural support frame 1740 and two product volumes 1750-1 and 1750-2 disposed side by side, separated by a vertical wall 1755, with dispensers 1760-1 and 1760-2 on the front (or alternatively, at other illustrated locations on the front or on the back) of the container 1700. The dispenser 1760-1 is in fluid communication with the product volume 1750-1 and the dispenser 1760-2 is in fluid communication with the product volume 1750-2. Figure 17B illustrates a side view of the stand up flexible container 1700 of Figure 17A.

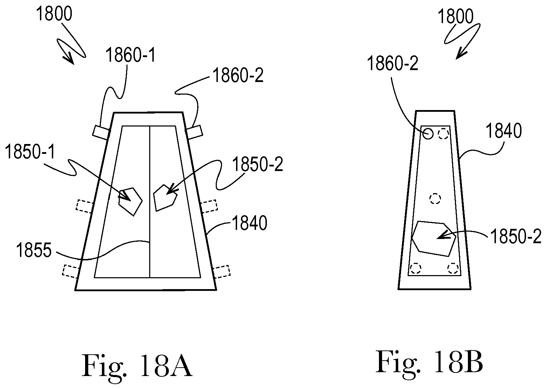

Figure 18A illustrates a front view of an embodiment of a stand up flexible container 1800 having a structural support frame 1840 and two product volumes 1850-1 and 1850-2 disposed side by side, separated by a vertical wall 1855, with dispensers 1860-1 and 1860-2 on the sides of the container 1800 (alternatively, at any other illustrated location on the sides). The dispenser 1860-1 is in fluid communication with the product volume 1850-1 and the dispenser 1860-2 is in fluid communication with the product volume 1850-2. Figure 18B illustrates a side view of the stand up flexible container 1800 of Figure 18A.

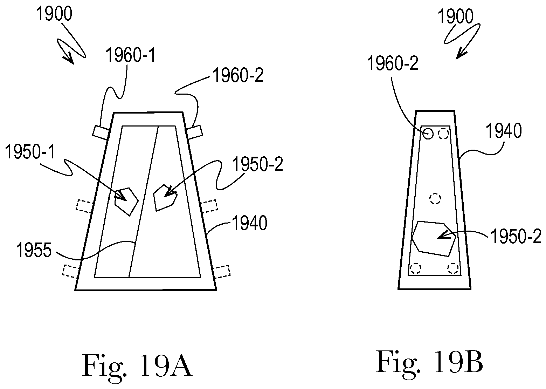

Figure 19A illustrates a front view of an embodiment of a stand up flexible container 1900 having a structural support frame 1940 and two product volumes 1950-1 and 1950-2 disposed side by side, separated by an angled wall 1955, with dispensers 1960-1 and 1960-2 on the sides of the container 1900 (alternatively, at any other illustrated location on the sides). The dispenser 1960-1 is in fluid communication with the product volume 1950-1 and the dispenser 1960-2 is in fluid communication with the product volume 1950-2. Figure 19B illustrates a side view of the stand up flexible container 1900 of Figure 19A.

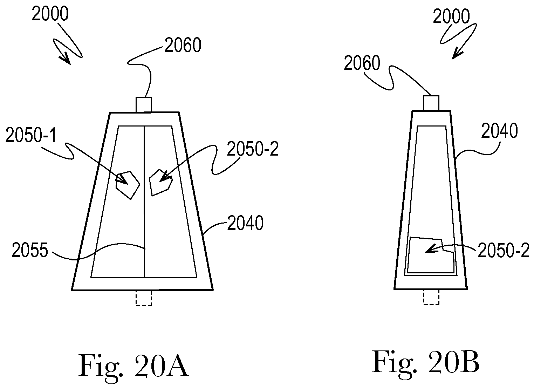

Figure 20A illustrates a front view of an embodiment of a stand up flexible container 2000 having a structural support frame 2040 and two product volumes 2050-1 and 2050-2 disposed side by side, separated by a vertical wall 2055, with a parallel dispenser 2060 on the top (or alternatively, on the bottom) of the container 2000. The parallel dispenser 2060 is in fluid communication with the product volume 2050-1 and with the product volume 2050-2. Figure 20B illustrates a side view of the stand up flexible container 2000 of Figure 20A.

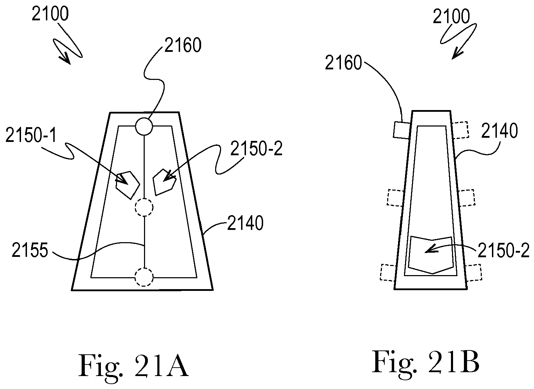

Figure 21A illustrates a front view of an embodiment of a stand up flexible container 2100 having a structural support frame 2140 and two product volumes 2150-1 and 2150-2 disposed side by side, separated by a vertical wall 2155, with a parallel dispenser 2160 on the front (or alternatively, at other illustrated locations on the front or on the back) of the container 2100. The parallel dispenser 2160 is in fluid communication with the product volume 2150-1 and with the product volume 2150-2. Figure 21B illustrates a side view of the stand up flexible container 2100 of Figure 21A.

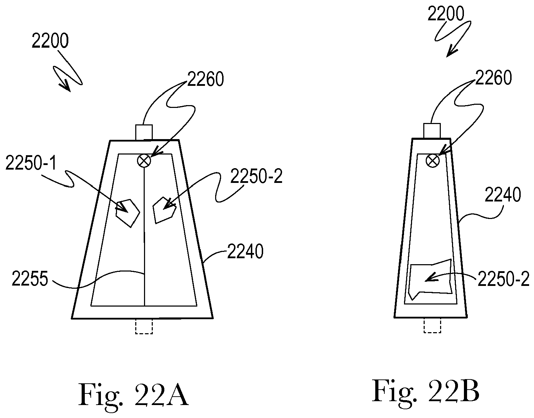

Figure 22A illustrates a front view of an embodiment of a stand up flexible container 2200 having a structural support frame 2240 and two product volumes 2250-1 and 2250-2 disposed side by side, separated by a vertical wall 2255, with a mixing dispenser 2260 on the top (or alternatively, on the bottom) of the container 2200. The mixing dispenser 2260 is in fluid communication with the product volume 2250-1 and with the product volume 2250-2. Figure 22B illustrates a side view of the stand up flexible container 2200 of Figure 22A.

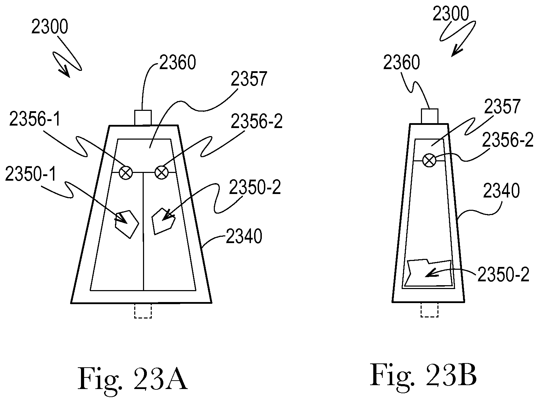

Figure 23A illustrates a front view of an embodiment of a stand up flexible container 2300 having a structural support frame 2340 and two product volumes 2350-1 and 2350-2 disposed side by side, separated by a vertical wall 2355, mixing valves 2356-1 and 2356-2 and a mixing volume 2357, and with a dispenser 2360 on the top (or alternatively, on the bottom) of the container 2300. The mixing valve 2356-1 allows and controls fluid communication between with the product volume 2350-1 and the mixing volume 2357 and the mixing valve 2356-2 allows and controls fluid communication between with the product volume 2350-2 and the mixing volume 2357. In some embodiments, a mixing valve also can meter the rate of fluid communication between a product volume and a mixing volume. The dispenser 2360 is in fluid communication with the mixing volume 2357. Figure 23B illustrates a side view of the stand up flexible container 2300 of Figure 23A.

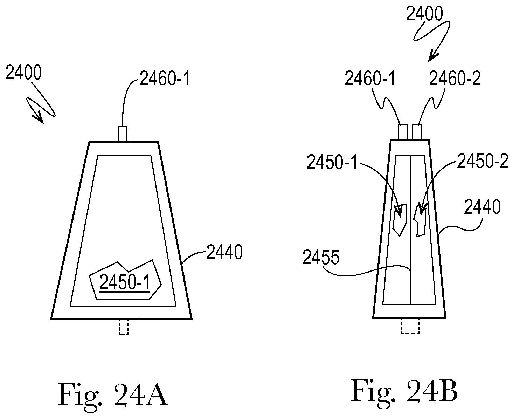

Figure 24A illustrates a front view of an embodiment of a stand up flexible container 2400 having a structural support frame 2440 and two product volumes 2450-1 and 2450-2 disposed front to back, separated by a vertical wall 2455, with dispensers 2460-1 and 2460-2 on the top (or alternatively, on the bottom) of the container 2400. The dispenser 2460-1 is in fluid communication with the product volume 2450-1 and the dispenser 2460-2 is in fluid communication with the product volume 2450-2. Figure 24B illustrates a side view of the stand up flexible container 2400 of Figure 24A.

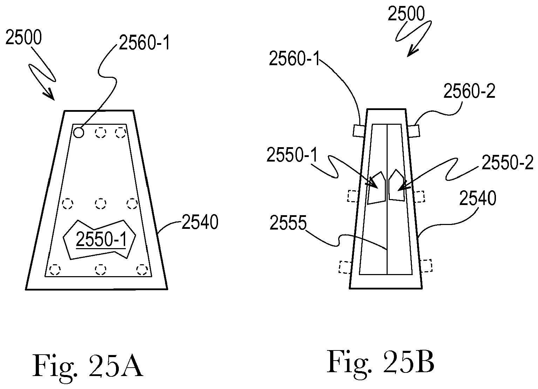

Figure 25A illustrates a front view of an embodiment of a stand up flexible container 2500 having a structural support frame 2540 and two product volumes 2550-1 and 2550-2 disposed front to back, separated by a vertical wall 2555, with dispensers 2560-1on the front and the back of the container 2500 (or alternatively, at other illustrated locations on the front or on the back). The dispenser 2560-1 is in fluid communication with the product volume 2550-1 and the dispenser 2560-2 is in fluid communication with the product volume 2550-2. Figure 25B illustrates a side view of the stand up flexible container 2500 of Figure 25A.

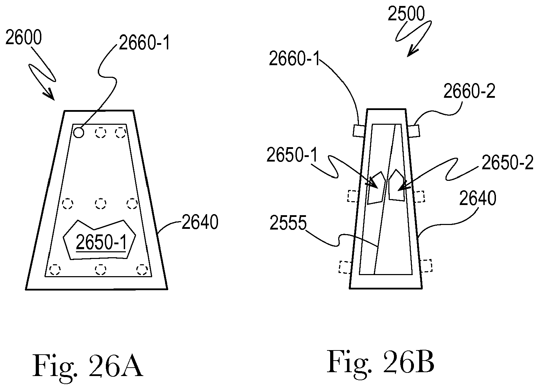

Figure 26A illustrates a front view of an embodiment of a stand up flexible container 2600 having a structural support frame 2640 and two product volumes 2650-1 and 2650-2 disposed front to back, separated by an angled wall 2655, with dispensers 2660-1 and 2660-2 on the front and the back of the container 2600 (or alternatively, at other illustrated locations on the front or on the back). The dispenser 2660-1 is in fluid communication with the product volume 2650-1 and the dispenser 2660-2 is in fluid communication with the product volume 2650-2. Figure 26B illustrates a side view of the stand up flexible container 2600 of Figure 26A.

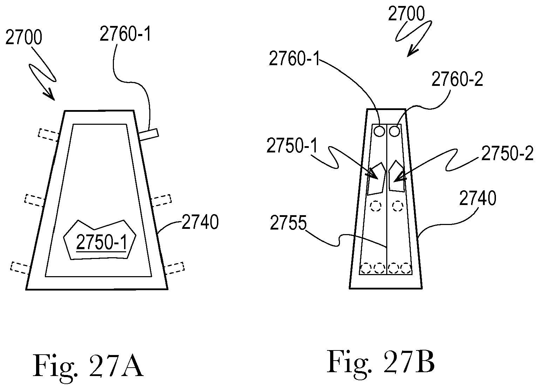

Figure 27A illustrates a front view of an embodiment of a stand up flexible container 2700 having a structural support frame 2740 and two product volumes 2750-1 and 2750-2 disposed front to back, separated by a vertical wall 2755, with dispensers 2760-1 and 2760-2 on the sides of the container 2700 (alternatively, at any other illustrated location on the sides). The dispenser 2760-1 is in fluid communication with the product volume 2750-1 and the dispenser 2760-2 is in fluid communication with the product volume 2750-2. Figure 27B illustrates a side view of the stand up flexible container 2700 of Figure 27A.

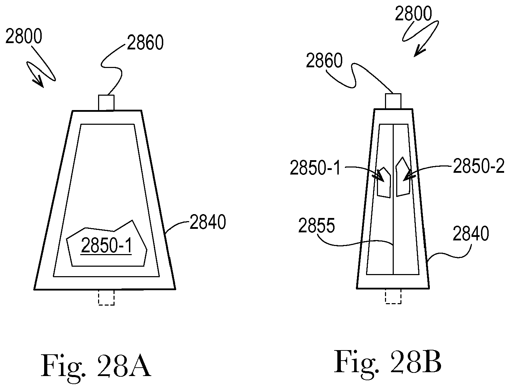

Figure 28A illustrates a front view of an embodiment of a stand up flexible container 2800 having a structural support frame 2840 and two product volumes 2850-1 and 2850-2 disposed front to back, separated by a vertical wall 2855, with a parallel dispenser 2860 on the top (or alternatively, on the bottom) of the container 2800. The parallel dispenser 2860 is in fluid communication with the product volume 2850-1 and with the product volume 2850-2. Figure 28B illustrates a side view of the stand up flexible container 2800 of Figure 28A.

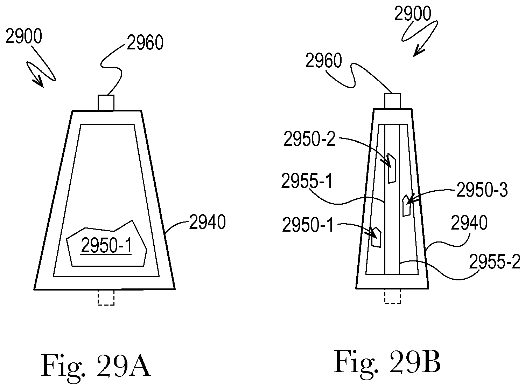

Figure 29A illustrates a front view of an embodiment of a stand up flexible container 2900 having a structural support frame 2940 and three product volumes 2950-1, 2950-2, and 2950-3 disposed front to back, separated by vertical walls 2955-1 and 2955-2, with a parallel dispenser 2690 on the top (or alternatively, on the bottom) of the container 2900. The parallel dispenser 2960 is in fluid communication with the product volume 2950-1, with the product volume 2950-2, and with the product volume 2950-2. Figure 29B illustrates a side view of the stand up flexible container 2900 of Figure 29A.

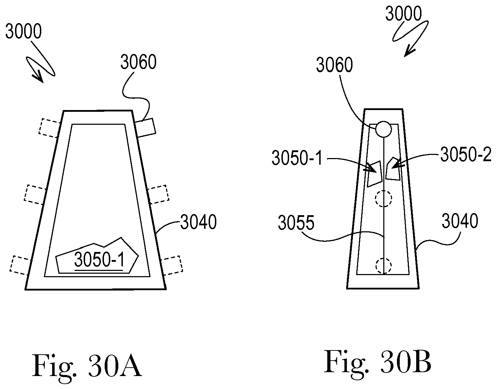

Figure 30A illustrates a front view of an embodiment of a stand up flexible container 3000 having a structural support frame 3040 and two product volumes 3050-1 and 3050-2 disposed front to back, separated by a vertical wall 3055, and with a parallel dispenser 3060 on the side of the container 3000 (alternatively, at any other illustrated location on the sides). The parallel dispenser 3060 is in fluid communication with the product volume 3050-1 and with the product volume 3050-2. Figure 30B illustrates a side view of the stand up flexible container 3000 of Figure 30A.

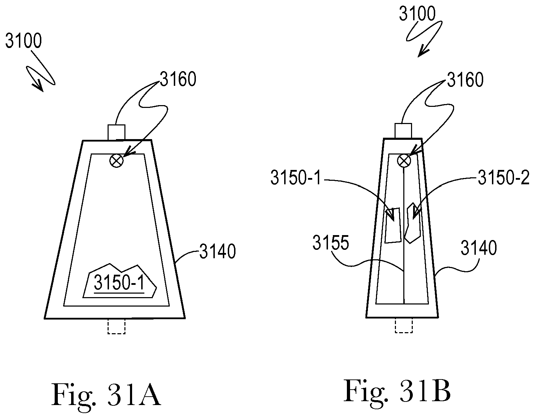

Figure 31A illustrates a front view of an embodiment of a stand up flexible container 3100 having a structural support frame 3140 and two product volumes 3150-1 and 3150-2 disposed front to back, separated by a vertical wall 3155, and with a mixing dispenser 3160 on the top (or alternatively, on the bottom) of the container 3100. The mixing dispenser 3160 is in fluid communication with the product volume 3150-1 and with the product volume 3150-2. Figure 31B illustrates a side view of the stand up flexible container 3100 of Figure 31A.

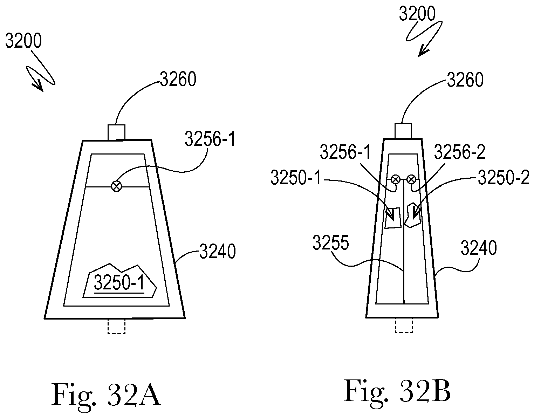

Figure 32A illustrates a front view of an embodiment of a stand up flexible container 3200 having a structural support frame 3240 and two product volumes 3250-1 and 3250-2 disposed front to back, separated by a vertical wall 3255, mixing valves 3256-1 and 3256-2 and a mixing volume 3257, and with dispensers 3260 on the top (or alternatively, on the bottom) of the container 3200. The mixing valve 3256-1 allows and controls fluid communication between with the product volume 3250-1 and the mixing volume 3257 and the mixing valve 3256-2 allows and controls fluid communication between with the product volume 3250-2 and the mixing volume 3257. The dispenser 3260 is in fluid communication with the mixing volume 3257. Figure 32B illustrates a side view of the stand up flexible container 3200 of Figure 32A.

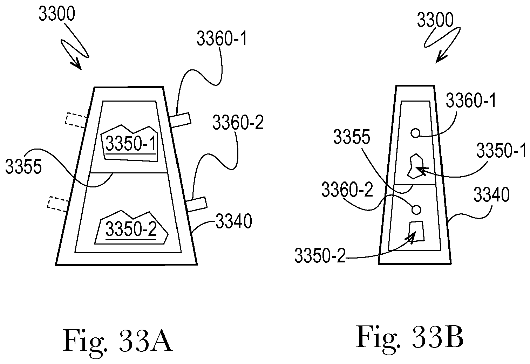

Figure 33A illustrates a front view of an embodiment of a stand up flexible container 3300 having a structural support frame 3340 and two product volumes 3350-1 and 3350-2 disposed top to bottom, separated by a horizontal wall 3355, and with dispensers 3360-1 and 3360-2 on the side of the container 3300 (alternatively, at other illustrated locations on the other side). The dispenser 3360-1 is in fluid communication with the product volume 3350-1 and the dispenser 3360-2 is in fluid communication with the product volume 3350-2. Figure 33B illustrates a side view of the stand up flexible container 3300 of Figure 33A.

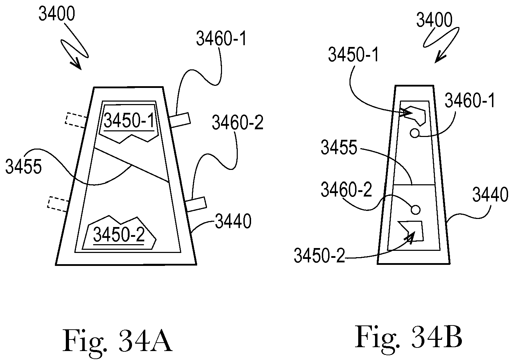

Figure 34A illustrates a front view of an embodiment of a stand up flexible container 3400 having a structural support frame 3440 and two product volumes 3450-1 and 3450-2 disposed top to bottom, separated by an angled wall 3455, and with dispensers 3460-1 and 3460-2 on the side of the container 3400 (alternatively, at other illustrated locations on the other side). The dispenser 3460-1 is in fluid communication with the product volume 3450-1 and the dispenser 3460-2 is in fluid communication with the product volume 3450-2. Figure 34B illustrates a side view of the stand up flexible container 3400 of Figure 34A.

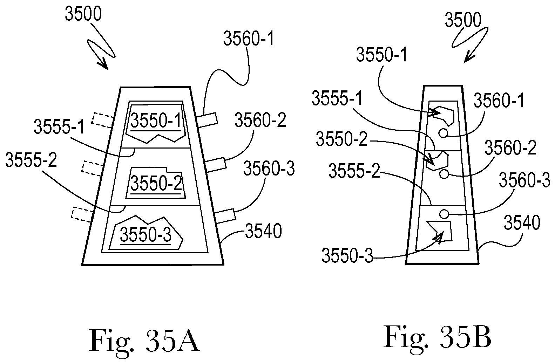

Figure 35A illustrates a front view of an embodiment of a stand up flexible container 3500 having a structural support frame 3540 and three product volumes 3550-1, 3550-2, and 3550-3 disposed top to bottom, separated by horizontal walls 3555-1 and 3555-2, and with dispensers 3560-1, 3560-2, and 3560-3 on the sides of the container 3500 (alternatively, at other illustrated locations on the other side). The dispenser 3560-1 is in fluid communication with the product volume 3550-1, the dispenser 3560-2 is in fluid communication with the product volume 3550-2, and the dispenser 3560-3 is in fluid communication with the product volume 3550-3. Figure 35B illustrates a side view of the stand up flexible container 3500 of Figure 35A.

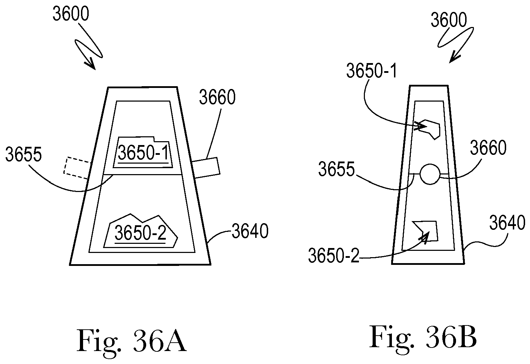

Figure 36A illustrates a front view of an embodiment of a stand up flexible container 3600 having a structural support frame 3640 and two product volumes 360-1 and 3650-2 disposed top to bottom, separated by a horizontal wall 3655, and with a parallel dispenser 3660 on the side of the container 3600 (alternatively, at other illustrated location on the other side). The parallel dispenser 3660 is in fluid communication with the product volume 3650-1 and with the product volume 3550-2. Figure 36B illustrates a side view of the stand up flexible container 3600 of Figure 36A.

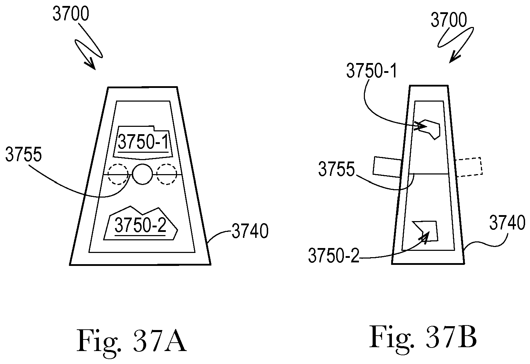

Figure 37A illustrates a front view of an embodiment of a stand up flexible container 3700 having a structural support frame 3740 and two product volumes 3750-1 and 3750-2 disposed top to bottom, separated by a horizontal wall 3755, and with a parallel dispenser 3760 on the front of the container 3700 (or alternatively, at other illustrated locations on the front or on the back). The parallel dispenser 3760 is in fluid communication with the product volume 3750-1 and with the product volume 3750-2. Figure 37B illustrates a side view of the stand up flexible container 3700 of Figure 37A.

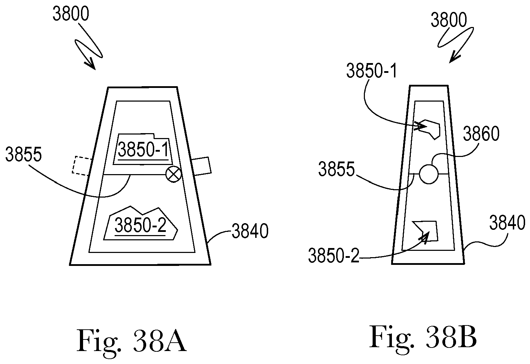

Figure 38A illustrates a front view of an embodiment of a stand up flexible container 3800 having a structural support frame 3840 and two product volumes 3850-1 and 3850-2 disposed top to bottom, separated by a horizontal wall 3855, and with a mixing dispenser 3860 on the side of the container 3800 (alternatively, at other illustrated location on the other side). The mixing dispenser 3860 is in fluid communication with the product volume 3850-1 and with the product volume 3850-2. Figure 38B illustrates a side view of the stand up flexible container 3800 of Figure 38A.

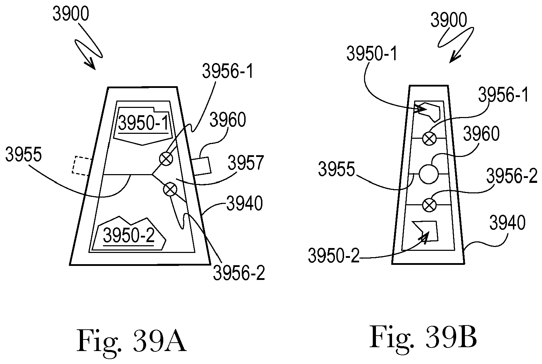

Figure 39A illustrates a front view of an embodiment of a stand up flexible container 3900 having a structural support frame 3940 and two product volumes 3950-1 and 3950-2 disposed top to bottom, separated by a horizontal wall 3955, mixing valves 3956-1 and 3956-3 and a mixing volume 3957, and a dispenser 3960 on the side of the container 3900. The mixing valve 3956-1 allows and controls fluid communication between with the product volume 3950-1 and the mixing volume 3957 and the mixing valve 3956-2 allows and controls fluid communication between with the product volume 3950-2 and the mixing volume 3957. The dispenser 3960 is in fluid communication with the mixing volume 3957. Figure 39B illustrates a side view of the stand up flexible container 3900 of Figure 39A.

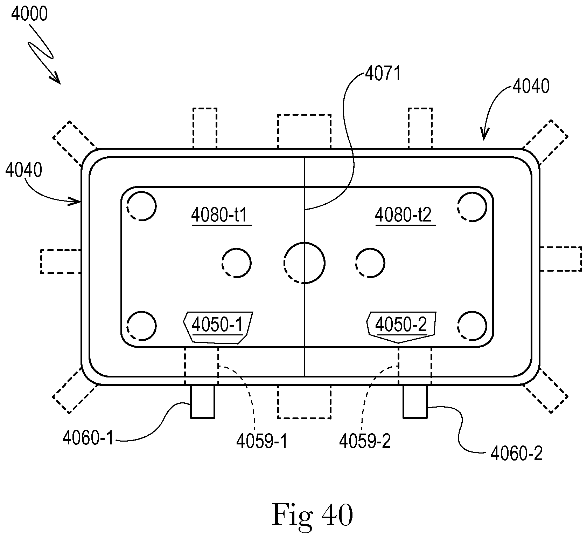

Figures 40-45 illustrate embodiments of self-supporting flexible containers, which are not stand up containers, but which are configured with structural support frames and multiple product volumes. Figures 40-45 illustrate embodiments of self-supporting flexible containers having an overall shape like a rectangle, a square, or squares, similar to the embodiment of Figures 9A-9B. Alternatively, any of the embodiments of Figures 40-45 can have a structural support frame that has an overall shape configured according to any of the embodiments disclosed herein, including the embodiments of Figures 10A-11B, and any of their alternate embodiments. Any of the elements (e.g. structural support frames, structural support members, panels, dispensers, etc.) of the embodiments of Figures 40-45, can be configured according to any of the embodiments disclosed herein. While each of the embodiments of Figures 40-45 illustrates a container with a particular number of product volumes and dispensers, in various embodiments, each container can include various numbers of product volumes and various numbers of dispensers, each configured according to any embodiment described herein. Figures 40-45 illustrate exemplary additional/alternate locations for dispenser with phantom line outlines. The embodiments of Figures 40-45 include nonstructural panels, disposed between the structural support members that form their structural support frames (as described herein), and part, parts, or about all, or approximately all, or substantially all, or nearly all, or all of each of the panels in the embodiments of Figures 40-45 is suitable to display any kind of indicia, and to be configured in any way described herein. For clarity, not all structural details of these flexible containers are shown in Figures 40-45; however any of the embodiments of Figures 40-45 can be configured to include any structure or feature for flexible containers, disclosed herein.

In particular, any of the embodiments of Figures 40-45 can be configured to include parallel dispensers, mixing dispensers, walls, and/or mixing volumes, as disclosed herein in relation to the embodiments of Figures 15A-39B. In other words, regardless of differences in overall shape (e.g. resulting from the geometries of the structural support frames) and regardless of differences in stand up (e.g. each of the embodiments of Figures 15A-39B can be laid on its back to simulate a self-supporting flexible container that is not a stand up container), any of the features of parallel dispensers, mixing dispensers, walls, and/or mixing volumes can be reapplied to any of the embodiments of Figures 40-45, as will be understood by one of skill in the art.

Figure 40 illustrates a top view of an embodiment of a self-supporting flexible container 4000 having a structural support frame 4040 and two product volumes 4050-1 and 4050-2 disposed side by side, adjacent to each other, separated by a seal 4071, wherein the one structural support frame 4040 supports both product volumes 4050-1 and 4050-2, and there is a dispenser 4060-1 and 4060-2 for each of the product volumes 4050-1 and 4050-2. The seal 4071 extends linearly over the entire container 4000 from its front to its back and divides both the product volume space as well as the structural support members that form the structural support frame 4040. The seal 4071 also separates the top of the container 4000 into top panels 4080-t1 and 4080-t2. The structural support members of the structural support frame 4040 surround the top panels 4080-t1 and 4080-t2, as they are disposed together, side by side. Portions of the top panels 4080-t1 and 4080-t2 are illustrated as broken away, in order to show the product volumes 4050-1 and 4050-2. The product volume 4050-1 is configured to dispense fluent product through a flow channel 4059-1 and a dispenser 4060-1 in the front. The product volume 4050-2 is configured to dispense fluent product through a flow channel 4059-2 and a dispenser 4060-2 in the front. However, in various embodiments, either or both of the dispensers 4060-1 and 4060-2 can be disposed in alternate locations (as illustrated by the smaller phantom line outlines) or even combined into a parallel dispenser or a mixing dispenser (as illustrated by the larger phantom line outlines).

In alternative embodiments, the seal 4071 can be constructed in different ways, resulting in various alternate versions of the container 4000. As a first example, the seal 4071 could have a lesser extent, dividing the product volume space, but not extending over the structural support members; thus leaving the surrounding structural support members undivided. As a second example, the seal 4071 could have a different size and/or shape, thus resulting in product volumes and/or structural support members of different sizes or shapes. As a third example, more than one seal could be used, which could separate the container 4000 into additional product volumes and/or additional structural support members. These alternative constructions of seals can also be combined to create additional alternate versions of the container 4000.

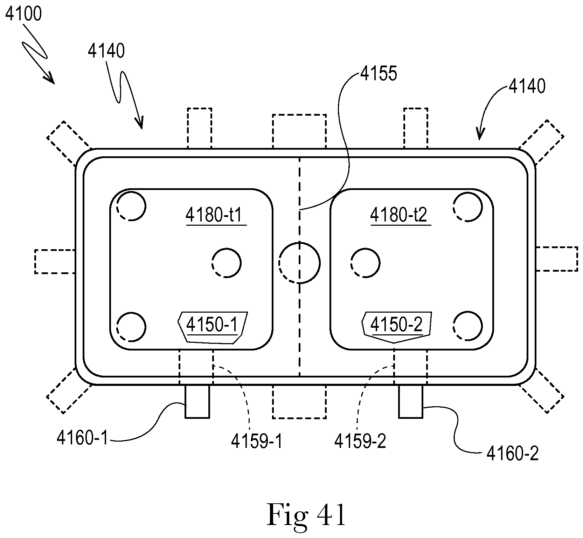

Figure 41 illustrates a top view of another embodiment of a self-supporting flexible container 4100 having a structural support frame 4140 and two product volumes 4150-1 and 4150-2 disposed side by side, adjacent to each other, wherein the one structural support frame 4140 supports both product volumes 4150-1 and 4150-2, and there is a dispenser 4160-1 and 4160-2 for each of the product volumes 4150-1 and 4150-2. The product volumes 4150-1 and 4150-2 are separated by a wall 4155 that extends between the product volumes 4150-1 and 4150-2 from front to back. Structural support members of the structural support frame 4140 surround a top panel 4180-t1, and structural support members of the structural support frame 4140 separately surround a top panel 4180-t2. Portions of the top panels 4180-t1 and 4180-t2 are illustrated as broken away, in order to show the product volumes 4150-1 and 4150-2. The product volume 4150-1 is configured to dispense fluent product through a flow channel 4159-1 and a dispenser 4160-1 in the front. The product volume 4150-2 is configured to dispense fluent product through a flow channel 4159-2 and a dispenser 4160-2 in the front. However, in various embodiments, either or both of the dispensers 4160-1 and 4160-2 can be disposed in alternate locations (as illustrated by the smaller phantom line outlines) or even combined into a parallel dispenser or a mixing dispenser (as illustrated by the larger phantom line outlines).

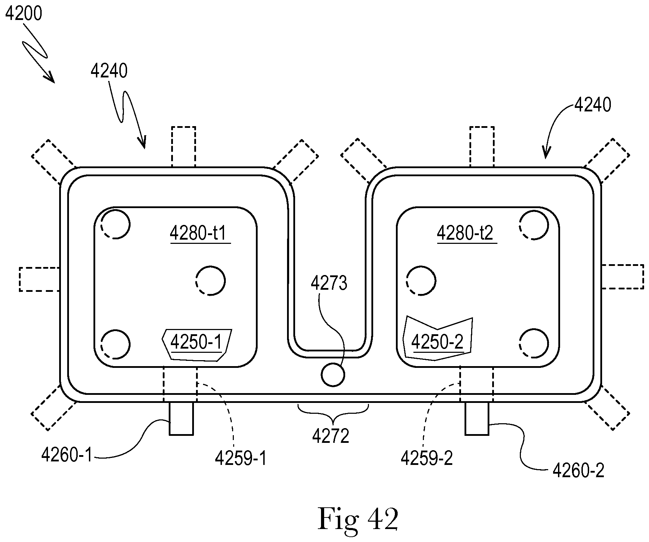

Figure 42 illustrates a top view of an embodiment of a self-supporting flexible container 4200 having a structural support frame 4240 and two product volumes 4250-1 and 4250-2 disposed side by side, spaced apart from each other, wherein the one structural support frame 4240 supports both of the product volumes 4250-1 and 4250-2, and there is a dispenser 4260-1 and 4260-2 for each of the product volumes 4250-1 and 4250-2. The product volumes 4250-1 and 4250-2 are spaced apart from each other by a joining region 4272 that extends from left to right across the front of the container 4200, and includes a portion of the structural support frame 4240. The joining region 4272 can serve as a handle for the container 4200. In various embodiments, a joining region can be disposed in various other locations (e.g. the middle or the back) in a flexible container and/or more than one joining region can be used. The joining region 4272 also includes an optional hole 4273 for hanging the flexible container 4200. Structural support members of the structural support frame 4240 surround a top panel 4280-t1, and structural support members of the structural support frame 4240 separately surround a top panel 4280-t2. Portions of the top panels 4280-t1 and 4280-t2 are illustrated as broken away, in order to show the product volumes 4250-1 and 4250-2. The product volume 4250-1 is configured to dispense fluent product through a flow channel 4259-1 and a dispenser 4260-1 in the front. The product volume 4250-2 is configured to dispense fluent product through a flow channel 4259-2 and a dispenser 4260-2 in the front. However, in various embodiments, either or both of the dispensers 4260-1 and 4260-2 can be disposed in alternate locations (as illustrated by the phantom line outlines).

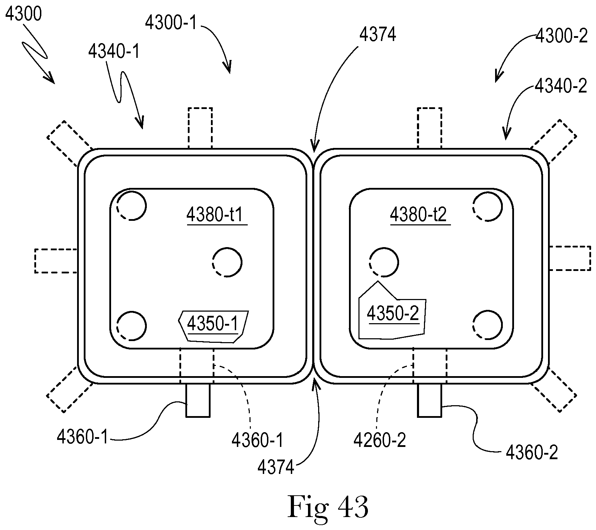

Not forming part of the claimed invention, but representing background art useful for understanding the invention is figure 43 illustrating a top view of an embodiment of an article of manufacture 4300 having two self-supporting flexible containers 4300-1 and 4300-2, disposed side by side, wherein each of the flexible containers 4300-1 and 4300-2 has a separate structural support frame 4340-1 and 4340-2 that supports a product volume 4350-1 and 4350-2 and has a dispenser 4360-1 and 4360-2, and the flexible containers 4300-1 and 4300-2 are (permanently or detachably) directly connected by a connection 4374 along adjacent sides. In the flexible container 4300-1, structural support members of the structural support frame 4340-1 surround a top panel 4380-t1, and in the flexible container 4300-1, structural support members of the structural support frame 4340-2 separately surround a top panel 4380-t2. Portions of the top panels 4380-t1 and 4380-t2 are illustrated as broken away, in order to show the product volumes 4350-1 and 4350-2. The product volume 4350-1 is configured to dispense fluent product through a flow channel 4359-1 and a dispenser 4360-1 in the front. The product volume 4350-2 is configured to dispense fluent product through a flow channel 4359-2 and a dispenser 4360-2 in the front. In the embodiment of Figure 43, the flexible containers 4300-1 and 4300-2 are directly connected by the connection 4374 along substantially all of their sides. However, in various embodiments, the flexible containers 4300-1 and 4300-2 can be connected along part, parts, or about all, or approximately all, or substantially all, or nearly all, or all of either or both of their sides, fronts, and/or backs. Any number of self-supporting flexible containers can be connected in these ways, in linear arrays, in radial arrays, or in any pattern or configuration known in the art.

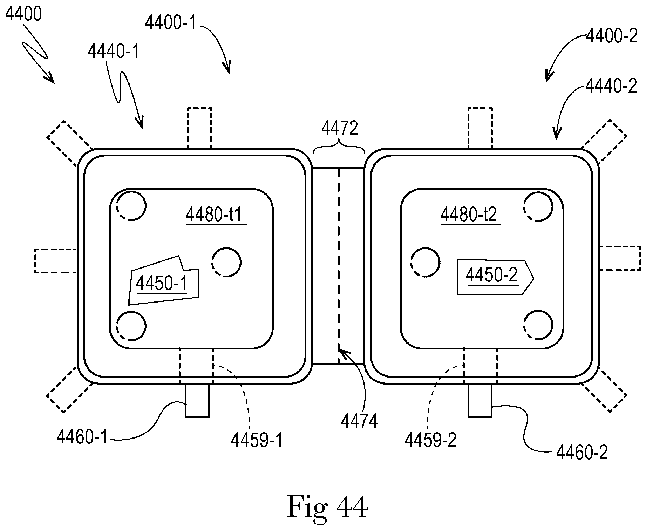

Not forming part of the claimed invention, but representing background art useful for understanding the invention is figure 44 illustrating a top view of an embodiment of an article of manufacture 4400 having two self-supporting flexible containers 4400-1 and 4400-2, disposed side by side, wherein each of the flexible containers 4400-1 and 4400-2 has a separate structural support frame 4440-1 and 4440-2 that supports a product volume 4450-1 and 4450-2 and has a dispenser 4460-1 and 4460-2, and the flexible containers 4400-1 and 4400-2 are detachably joined together along adjacent sides by a joining region 4472. The joining region 4472 can be made of one or more rigid and/or flexible materials. In the embodiment of Figure 44, the joining region 4474 does not include a portion of a structural support frame. The joining region 4472 includes a line of weakness 4474 that extends through the joining region 4472 from front to back, and which allows the flexible containers 4400-1 and 4400-2 to become detached from each other. However, in various embodiments, the joining region may not include a line of weakness; the flexible containers 4400-1 and 4400-2 may be permanently attached to each other. The product volume 4450-1 is configured to dispense fluent product through a flow channel 4459-1 and a dispenser 4460-1 in the front. The product volume 4450-2 is configured to dispense fluent product through a flow channel 4459-2 and a dispenser 4460-2 in the front. In the embodiment of Figure 44, the flexible containers 4400-1 and 4400-2 are joined to the joining region 4472 along substantially all of their sides. However, in various embodiments, the flexible containers 4400-1 and 4400-2 can be joined to one or more joining regions along part, parts, or about all, or approximately all, or substantially all, or nearly all, or all of either or both of their sides, fronts, and/or backs. Any number of self-supporting flexible containers can be connected in these ways, in linear arrays, in radial arrays, or in any pattern or configuration known in the art.

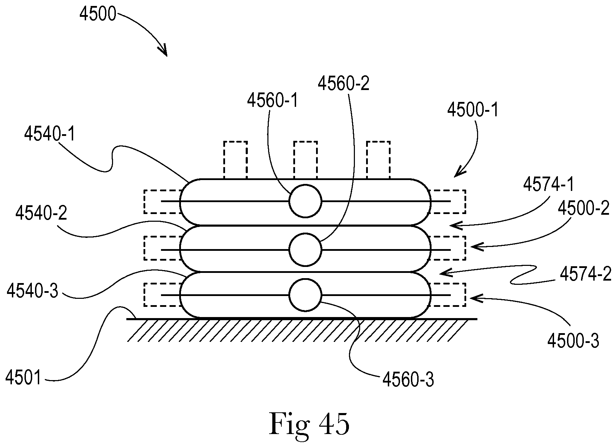

Not forming part of the claimed invention, but representing background art useful for understanding the invention is figure 45 illustrating a top view of an embodiment of an article of manufacture 4500 having three self-supporting flexible containers 4500-1, 4500-2, and 4500-3, disposed face to face on top of each other, wherein each of the flexible containers 4500-1, 4500-2, and 4500-3 has a separate structural support frame 4540-1, 4540-2, and 4540-3 that supports a product volume 4550-1, 4550-2, and 4550-3 and has a dispenser 4560-1, 4560-2, and 4560-3, and the flexible containers 4500-1, 4500-2, and 4500-3 are directly and permanently connected by connections 4574-1 and 4574-2. However, in various embodiments, flexible containers 4500-1, 4500-2, and 4500-3 may not be permanently attached to each other, but may be detachably connected and/or joined together. For each of the flexible containers 4500-1, 4500-2, and 4500-3, the elements can be configured in the same manner as like-numbered elements of the self-supporting flexible container 900 of Figures 9A-9B. In the embodiment of Figure 45, the flexible containers 4500-1, 4500-2, and 4500-3 are vertically aligned and connected together across substantially all of their tops and/or bottoms. However, in various embodiments, the flexible containers 4500-1, 4500-2, and 4500-3 may not be vertically aligned and can be connected and/or joined along part, parts, or about all, or approximately all, or substantially all, or nearly all, or all of their tops and/or bottoms, including the tops and/or bottoms of their structural support frames 4540-1, 4540-2, and 4540-3 and/or their top and bottom panels. Any number of self-supporting flexible containers can be connected in these ways, in linear arrays, in radial arrays, or in any pattern or configuration known in the art.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A non-durable self-supporting flexible container (1500) comprising
a first product volume (1550 -1), and **characterized in that** the flexible container further comprises:
a second product volume (1550-2); and
a structural support frame (1540) configured to support both the first product volume and the second product volume (1550-1, 1550-2), said structural support frame being a rigid structure formed of one or more structural support members, joined together, around one or more sizable empty spaces and/or one or more nonstructural panels, and generally used as a major support for the product volumes in the flexible container and in making the container self-supporting and/or standing upright; wherein said one or more structural support members is a rigid physical structure, comprising one or more expanded structural support volumes; wherein said one or more expanded structural support volumes is a fillable space made from one or more flexible materials that is configured to be at least partially filled with one or more expansion materials, which create tension in the one or more flexible materials, and form the expanded structural support volume.

2. The flexible container of claim 1, wherein:
the first product volume is a single dose product volume; and
the second product volume is a multiple dose product volume.

3. The flexible container of claim 1 or 2, wherein:
the first product volume contains a first fluent product, which is a composition essentially made from a defined group of ingredients combined in a first apportionment; and
the second product volume contains a second fluent product, which is a composition essentially made from the defined group of ingredients combined in a second apportionment, which differs from the first apportionment.

4. The flexible container of claim 1 or 2, wherein:
the first product volume contains a first fluent product, which is a composition essentially made from a defined group of active ingredients and a first additive; and
the second product volume contains a second fluent product, which is a composition essentially made from the defined group of active ingredients and a second additive, which differs from the first additive.

5. The flexible container of claim 4, wherein:
the first additive is a first distinguishing additive; and
the second additive is a second distinguishing additive, which differs from the first distinguishing additive.

6. The flexible container of claim 1 or 2, wherein:
the first product volume contains a first fluent product, which is a base composition; and
the second product volume contains a second fluent product, which is an additive configured to be combined with the base composition.

7. The flexible container of any prior claim, further comprising only one dispenser.

8. The flexible container of claim 7, wherein the dispenser is in fluid communication with only one of the product volumes.

9. The flexible container of claim 7 or 8, wherein the first product volume is separated from the second product volume by a frangible wall.

10. The flexible container of claim 7, including a mixing volume that is in fluid communication with the first product volume, with the second product volume, and with the dispenser.

11. The article of claim 10, wherein the mixing volume is configured to form a single-dose volume.

12. The flexible container of any prior claim, which is a stand up container.

13. The flexible container of any prior claim, which is a disposable container.

14. The flexible container of any prior claim, wherein each of the product volumes directly contains a fluent product.

15. The flexible container of any prior claim, wherein each of the product volumes is closed.

## Patentansprüche

1. Nicht dauerhafter selbsttragender elastischer Behälter (1500), umfassend
ein erstes Produktvolumen (1550 -1), und **dadurch gekennzeichnet, dass** der elastische Behälter ferner Folgendes umfasst:
ein zweites Produktvolumen (1550-2); und
einen strukturellen Stützrahmen (1540), der dafür konfiguriert ist, sowohl das erste Produktvolumen als auch das zweite Produktvolumen (1550-1, 1550-2) zu stützen, wobei der struktureller Stützrahmen eine feste Struktur ist, die aus einem oder mehreren strukturelle Stützelementen gebildet wird, die um einen oder mehrere greifbare Hohlräume und/oder ein oder mehrere nichtstrukturelle Felder herum miteinander verbunden sind und allgemein als eine Hauptstütze für das Produktvolumen in dem elastischen Behälter und zum Selbststützen und/oder Aufrechtstehen des Behälters verwendet werden; wobei das eine oder die mehreren strukturellen Stützelemente eine feste physische Struktur ist bzw. sind, die eine oder mehrere erweiterte strukturelle Stützvolumen umfasst; wobei das eine oder die mehreren erweiterten strukturellen Stützvolumen ein füllbarer Hohlraum ist, der aus einem oder mehreren elastischen Materialien besteht und so konfiguriert ist, dass er wenigstens teilweise mit einem oder mehreren Ausdehnungsmaterialien gefüllt ist, die Spannung in dem einen oder mehreren elastischen Materialien erzeugen, und das erweiterte strukturelle Stützvolumen bilden.

2. Elastischer Behälter nach Anspruch 1, wobei:
das erste Produktvolumen ein Einzeldosis-Produktvolumen ist; und
das zweite Produktvolumen ein Mehrfachdosis-Produktvolumen ist.

3. Elastischer Behälter nach Anspruch 1 oder 2, wobei:
das erste Produktvolumen ein erstes flüssiges Produkt ist, was eine Zusammensetzung ist, die im Wesentlichen aus einer festgelegten Gruppe an Inhaltsstoffen hergestellt wurde, die in einer ersten Verteilung miteinander vermischt wurden; und
das zweite Produktvolumen ein zweites flüssiges Produkt ist, was eine Zusammensetzung ist, die im Wesentlichen aus einer festgelegten Gruppe an Inhaltsstoffen hergestellt wurde, die in einer zweiten Verteilung, die sich von der ersten Verteilung unterscheidet, miteinander vermischt wurden.

4. Elastischer Behälter nach Anspruch 1 oder 2, wobei:
das erste Produktvolumen ein erstes flüssiges Produkt enthält, was eine Zusammensetzung ist, die im Wesentlichen aus einer festgelegten Gruppe an aktiven Inhaltsstoffen und einem ersten Zusatzstoff hergestellt wurde; und
das zweite Produktvolumen ein zweites flüssiges Produkt ist, was eine Zusammensetzung ist, die im Wesentlichen aus einer festgelegten Gruppe an aktiven Inhaltsstoffen und einem ersten Zusatzstoff, der sich von dem ersten Zusatzstoff unterscheidet, hergestellt wurde.

5. Elastischer Behälter nach Anspruch 4, wobei:
der erste Zusatzstoff ein erster charakteristischer Zusatzstoff ist; und
der zweite Zusatzstoff ein zweiter charakteristischer Zusatzstoff ist, der sich von dem ersten charakteristischen Zusatzstoff unterscheidet.

6. Elastischer Behälter nach Anspruch 1 oder 2, wobei:
das erste Produktvolumen ein erstes flüssiges Produkt enthält, das eine Basiszusammensetzung ist; und
das zweite Produktvolumen ein zweites flüssiges Produkt enthält, das ein Zusatzstoff ist, der dafür konfiguriert ist, mit der Basiszusammensetzung kombiniert zu werden.

7. Elastischer Behälter nach einem der vorstehenden Ansprüche, der ferner nur einen Spender umfasst.

8. Elastischer Behälter nach Anspruch 7, wobei der Spender in Flüssigkeitsaustausch mit nur einem der Produktvolumen steht.

9. Elastischer Behälter nach Anspruch 7 oder 8, wobei das erste Produktvolumen von dem zweiten Produktvolumen durch eine reißbare Wand getrennt ist.

10. Elastischer Behälter nach Anspruch 7, der ein Mischvolumen einschließt, das in Flüssigkeitsaustausch mit dem ersten Produktvolumen, mit dem zweiten Produktvolumen und mit dem Spender steht.

11. Artikel nach Anspruch 10, wobei das Mischvolumen so konfiguriert ist, dass es ein Einzeldosisvolumen bildet.

12. Elastischer Behälter nach einem der vorstehenden Ansprüche, der ein Standbehälter ist.

13. Elastischer Behälter nach einem der vorstehenden Ansprüche, der ein Einwegbehälter ist.

14. Elastischer Behälter nach einem der vorstehenden Ansprüche, wobei jedes der Produktvolumen direkt ein flüssiges Produkt enthält.

15. Elastischer Behälter nach einem der vorstehenden Ansprüche, wobei jedes der Produktvolumen geschlossen ist.

## Revendications

1. Récipient souple autoporteur non durable (1500) comprenant
un premier volume de produit (1550 -1), et **caractérisé en ce que** le récipient souple comprend en outre :
un deuxième volume de produit (1550-2) ; et
un cadre de support structural (1540) configuré pour supporter à la fois le premier volume de produit et le deuxième volume de produit (1550-1, 1550-2), ledit cadre de support structural étant une structure rigide formée d'un ou plusieurs éléments de support structural, joints ensemble, autour d'un ou plusieurs espaces vides assez grands et/ou d'un ou plusieurs panneaux non structuraux, et généralement utilisée en tant que support principal pour les volumes de produit dans le récipient souple et pour rendre le récipient autoporteur et/ou le faire debout ; dans lequel ledit ou lesdits éléments de support structural sont une structure physique rigide, comprenant un ou plusieurs volumes de support structural expansés ; dans lequel ledit ou lesdits volumes de support structural expansés sont un espace remplissable fabriqué à partir d'un ou plusieurs matériaux souples qui sont configurés pour être au moins partiellement remplis avec un ou plusieurs matériaux d'expansion, qui créent une tension dans le ou les matériaux souples, et forment le volume de support structural expansé.

2. Récipient souple selon la revendication 1, dans lequel :
le premier volume de produit est un volume de produit à dose unique ; et
le deuxième volume de produit est un volume de produit à plusieurs doses.

3. Récipient souple selon la revendication 1 ou 2, dans lequel :
le premier volume de produit contient un premier produit fluide, qui est une composition pratiquement fabriquée à partir d'un groupe défini d'ingrédients combinés dans une première répartition ; et
le deuxième volume de produit contient un deuxième produit fluide, qui est une composition pratiquement fabriquée à partir du groupe défini d'ingrédients combinés dans une deuxième répartition, qui diffère de la première répartition.

4. Récipient souple selon la revendication 1 ou 2, dans lequel :
le premier volume de produit contient un premier produit fluide, qui est une composition pratiquement fabriquée à partir d'un groupe défini d'ingrédients actifs et d'un premier additif ; et
le deuxième volume de produit contient un deuxième produit fluide, qui est une composition pratiquement fabriquée à partir du groupe défini d'ingrédients actifs et d'un deuxième additif, qui diffère du premier additif.

5. Récipient souple selon la revendication 4, dans lequel :
le premier additif est un premier additif distinctif ; et
le deuxième additif est un deuxième additif distinctif, qui diffère du premier additif distinctif.

6. Récipient souple selon la revendication 1 ou 2, dans lequel :
le premier volume de produit contient un premier produit fluide, qui est une composition de base ; et
le deuxième volume de produit contient un deuxième produit fluide, qui est un additif configuré pour être combiné avec la composition de base.

7. Récipient souple selon l'une quelconque revendication précédente, comprenant en outre un seul distributeur.

8. Récipient souple selon la revendication 7, dans lequel le distributeur est en communication fluidique avec un seul des volumes de produit.

9. Récipient souple selon la revendication 7 ou 8, dans lequel le premier volume de produit est séparé du deuxième volume de produit par une paroi cassable.

10. Récipient souple selon la revendication 7, incluant un volume de mélange qui est en communication fluidique avec le premier volume de produit, avec le deuxième volume de produit et avec le distributeur.

11. Article selon la revendication 10, dans lequel le volume de mélange est configuré pour former un volume de dose unique.

12. Récipient souple selon l'une quelconque revendication précédente, qui est un récipient dressé.

13. Récipient souple selon l'une quelconque revendication précédente, qui est un récipient jetable.

14. Récipient souple selon l'une quelconque revendication précédente, dans lequel chacun des volumes de produit contient directement un produit fluide.

15. Récipient souple selon l'une quelconque revendication précédente, dans lequel chacun des volumes de produit est fermé.
